# EUROPÄISCHE PATENTSCHRIFT

(11) **EP 3 625 781 B1**
(45) Veröffentlichungstag und Bekanntmachung des Hinweises auf die Patenterteilung: **10.11.2021**
(21) Anmeldenummer: 18731027.1
(22) Anmeldetag: 07.06.2018
(51) Int. Cl.: G08C 17/00, A47L 5/38, A47L 9/28

(54) **ENERGIESPEICHERMODUL FÜR EINE HAND-WERKZEUGMASCHINE**
ENERGY STORAGE MODULE FOR A HAND TOOL MACHINE
MODULE DE STOCKAGE D'ÉNERGIE POUR UNE MACHINE D'OUTIL À MAIN

(30) Priorität: 08.06.2017 DE 102017112705; 08.06.2017 DE 102017112707; 29.12.2017 DE 102017131456; 29.12.2017 DE 102017131462
(43) Veröffentlichungstag der Anmeldung: 25.03.2020
(60) Teilanmeldung: 21184854.4
(73) Patentinhaber: Festool GmbH, 73240 Wendlingen (DE)
(72) Erfinder: CASPAR, Moritz, 70188 Stuttgart (DE)
(74) Vertreter: Patentanwälte Bregenzer und Reule Partnerschaftsgesellschaft mbB
(86) Internationale Anmeldenummer: PCT/EP2018/065098
(87) Internationale Veröffentlichungsnummer: WO 2018/224625

(56) Entgegenhaltungen:
- EP-A2- 2 628 431
- DE-A1-102012 003 073
- US-A1- 2010 199 453

## Beschreibung

Die Erfindung betrifft ein Energiespeichermodul zur Verwendung mit einem elektrischen Gerät in Gestalt einer elektrischen Hand-Werkzeugmaschine oder eines Staubsaugers, wobei das Energiespeichermodul eine Drahtlos-Kommunikationsschnittstelle zur drahtlosen Kommunikation mit einer von dem Energiespeichermodul entfernt angeordneten Extern-Kommunikationsvorrichtung, insbesondere einem Staubsauger, und ein Modulgehäuse, in dem ein elektrischer Energiespeicher, insbesondere eine Speicherzellenanordnung mit mindestens einer elektrisch wiederaufladbaren Speicherzelle, angeordnet ist und an dem eine Geräteschnittstelle zur lösbaren Verbindung des Energiespeichermoduls mit dem elektrischen Gerät vorgesehen ist, wobei die Geräteschnittstelle elektrische Geräte-Versorgungskontakte zur elektrischen Energieversorgung des elektrischen Geräts aufweist.

Derartige Energiespeichermodule werden beispielsweise benötigt, um Hand-Werkzeugmaschinen, beispielsweise Sägemaschinen, Schraubgeräte oder dergleichen, mit Strom zu versorgen. Auch Sauggeräte, insbesondere mobile Sauggeräte, werden in zunehmendem Maße anhand von Energiespeichermodulen oder Akkupacks mit Strom versorgt.

Ein Energiespeichermodul der eingangs genannten Art geht beispielsweise aus EP 2 628 431 A1 oder DE 10 2012 003 073 A1 hervor. Anhand des Energiespeichermoduls kann beispielsweise eine Stichsäge einen Staubsauger einschalten oder ausschalten, ohne dass eine drahtgebundene Verbindung notwendig ist. Die drahtlose Kommunikation kann ausschließlich über die Drahtlos-Kommunikationsschnittstelle des Energiespeichermoduls erfolgen. Das Energiespeichermodul erfasst beispielsweise einen Stromfluss durch einen Antriebsmotor des elektrischen Gerätes in Gestalt einer Stichsäge und schaltet in Abhängigkeit von diesem Strom den Staubsauger ein oder aus.

Allerdings ist der Anwendungsbereich eines derartigen Energiespeichermoduls begrenzt.

Es ist daher die Aufgabe der vorliegenden Erfindung, ein verbessertes Energiespeichermodul bereit zu stellen.

Zur Lösung der Aufgabe ist bei einem Energiespeichermodul der eingangs genannten Art vorgesehen, dass die Geräteschnittstelle des Energiespeichermoduls eine von den Geräte-Versorgungskontakten separate Datenschnittstelle, insbesondere eine Busschnittstelle, zu einer Datenkommunikation mit dem elektrischen Gerät aufweist, wobei das Energiespeichermodul zum Senden von Sendesignalen über die Drahtlos-Kommunikationsschnittstelle an die Extern-Kommunikationsvorrichtung in Abhängigkeit von über die Datenschnittstelle von dem elektrischen Gerät erhaltenen Empfangsinformationen und/oder zum Senden von Sendeinformationen an das elektrische Gerät in Abhängigkeit von über die Drahtlos-Kommunikationsschnittstelle von der Extern-Kommunikationsvorrichtung empfangenen Empfangssignalen ausgestaltet ist.

Ein Verfahren zur Verwendung eines Energiespeichermoduls mit einem elektrischen Gerät in Gestalt einer elektrischen Hand-Werkzeugmaschine oder eines Staubsaugers, wobei das Energiespeichermodul eine Drahtlos-Kommunikationsschnittstelle zur drahtlosen Kommunikation mit einer von dem Energiespeichermodul entfernt angeordneten Extern-Kommunikationsvorrichtung, insbesondere einem Staubsauger, und ein Modulgehäuse, in dem ein elektrischer Energiespeicher, insbesondere eine Speicherzellenanordnung mit mindestens einer elektrisch wiederaufladbaren Speicherzelle, angeordnet ist und an dem eine Geräteschnittstelle zur lösbaren Verbindung des Energiespeichermoduls mit dem elektrischen Gerät vorgesehen ist, wobei die Geräteschnittstelle elektrische Geräte-Versorgungskontakte zur elektrischen Energieversorgung des elektrischen Geräts aufweist, sieht eine Datenkommunikation zwischen dem Energiespeichermodul und der Hand- Werkzeugmaschine über eine von der den Versorgungskontakten separate Datenschnittstelle, insbesondere eine Busschnittstelle, vor, wobei das Energiespeichermodul über die Drahtlos-Kommunikationsschnittstelle an die Extern-Kommunikationsvorrichtung in Abhängigkeit von über die Datenschnittstelle von dem elektrischen Gerät erhaltenen Empfangsinformationen Sendesignale sendet und/oder Sendeinformationen an das elektrische Gerät in Abhängigkeit von über die Drahtlos-Kommunikationsschnittstelle von der Extern-Kommunikationsvorrichtung empfangenen Empfangssignalen sendet.

Es ist ein Grundgedanke der vorliegenden Erfindung, dass sozusagen das Energiespeichermodul die Drahtlos-Kommunikation für die Kombination aus Energiespeichermodul und elektrischem Gerät leistet. Somit braucht das elektrische Gerät selbst keine entsprechenden Funktionen aufzuweisen, insbesondere auch keine Drahtlos-Kommunikationsschnittstelle haben.

Somit kann beispielsweise eine Steuerung der elektrischen Maschine, insbesondere deren Mikrocontroller, arbeiten, ohne dass er zusätzlich noch eine Drahtlos-Kommunikationsschnittstelle bedienen muss. Diese ist sozusagen ausgelagert, in oder an das Energiespeichermodul. Wenn also beispielsweise in der drahtlosen Kommunikation mit einem von dem elektrischen Gerät separaten Gerät, nämlich über die Drahtlos-Kommunikationsschnittstelle Verzögerungen auftreten. So können beispielsweise drahtlos übermittelte Nachrichten langsamer oder verspätet beantwortet werden. Der Mikrocontroller oder die Steuerung des elektrischen Gerätes sind jedoch durch derartige Wartezeiten oder Latenzzeiten nicht belastet. Die Steuerung kann unbelastet von der drahtlosen Kommunikation die Funktionen des elektrischen Gerätes, beispielsweise eine Ansteuerung des Antriebsmotors des elektrischen Gerätes, eine Überwachung des elektrischen Gerätes oder dergleichen, leisten.

Gleichzeitig ergibt sich ein Vorteil hinsichtlich der Aktualität. Üblicherweise werden die elektrischen Geräte in Gestalt von elektrischen Hand-Werkzeugmaschinen oder Staubsaugern relativ lange genutzt. Demgegenüber sind Energiespeichermodule wesentlich weniger langlebig. Beispielsweise verschleißen Speicherzellen oder dergleichen von Energiespeichermodulen nach einiger Zeit, insbesondere nach einer vorbestimmten Anzahl von Ladevorgängen oder nach einer gewissen Lebensdauer. Mithin werden also Energiespeichermodule oder Akkupacks häufiger ersetzt als die von den Energiespeichermodulen mit elektrischer Energie zu versorgenden Geräte, nämlich Hand-Werkzeugmaschinen, Staubsauger oder dergleichen. Somit tritt auch häufiger der Fall auf, dass ein Energiespeichermodul ersetzt werden muss. In diesem Zuge kann dann eine aktualisierte drahtlose Kommunikation bereitgestellt werden, beispielsweise nach einem anderen und/oder neuen Standard oder verbesserten Standard.

Ohne weiteres kann also beispielsweise ein Energiespeichermodul mit einer WLAN-Schnittstelle ausgestattet sein, ein anderes Energiespeichermodul mit einer Bluetooth-Schnittstelle. Durch den einfachen Austausch der Energiespeichermodule an der Hand-Werkzeugmaschine oder dem Staubsauger, kann diese oder dieser einmal über WLAN und das andere Mal über Bluetooth kommunizieren.

Denkbar ist aber auch eine Variante, bei der die Drahtlos-Kommunikationsschnittstelle des Energiespeichermoduls mindestens zwei voneinander verschiedene drahtlose Kommunikationsstandards oder drahtlose Kommunikationstechnologien beherrscht, beispielsweise WLAN und Bluetooth, WLAN und Mobilfunk oder dergleichen. Es ist möglich, dass das Energiespeichermodul selbstständig erkennt, welche der verschiedenen Kommunikationstechnologie aktuell verwendet wird. Beispielsweise kann das Energiespeichermodul drahtlose Signale des Staubsaugers oder der Extern-Kommunikationsschnittstelle analysieren und eine zu dieser passende Kommunikationstechnologie auswählen, beispielsweise den ersten Kommunikationsstandard oder den zweiten Kommunikationsstandard. Empfängt das Energiespeichermodul beispielsweise Bluetooth-Signale, antwortet es oder kommuniziert es über Bluetooth mit der Extern-Kommunikationsschnittstelle, insbesondere dem Sauggerät, während das Energiespeichermodul bei anderen Kommunikationsstandards, beispielsweise Zigbee, WLAN, Mobilfunk oder dergleichen, diesen anderen Kommunikationsstandard auswählt oder aktiv schaltet.

Weiterhin kann eine Hand-Werkzeugmaschine durch die Anbringung eines erfindungsgemäßen Energiespeichermoduls überhaupt erst drahtlos kommunikationsfähig werden, beispielsweise wenn die Hand-Werkzeugmaschine keine drahtlose Kommunikation leisten kann. Dies ist im Übrigen eine bevorzugte Konfiguration, dass nämlich die Hand-Werkzeugmaschine keine eigene Drahtlos-Kommunikationsschnittstelle aufweist.

Es ist aber auch eine Variante der Erfindung möglich, bei der beide, nämlich die Hand-Werkzeugmaschine und das Energiespeichermodul jeweils eine Drahtlos-Kommunikationsschnittstelle aufweisen.

Die Drahtlos-Kommunikationsschnittstelle des Energiespeichermoduls sendet und empfängt beispielsweise mit einer Frequenz von 2,4 bis 2,6 GHz. Bevorzugt ist es, wenn die Drahtlos-Kommunikationsschnittstelle mehrere Drahtlos-Kommunikationskanäle, beispielsweise drei oder vier Drahtlos-Kommunikationskanäle, gleichzeitig bedienen kann.

Die Drahtlos-Kommunikationsschnittstelle des Energiespeichermoduls ist beispielsweise eine Bluetooth-Schnittstelle, eine WLAN-Schnittstelle oder dergleichen. Wenn diesbezüglich ein neuer Standard, beispielsweise mit einer höheren Datenübertragungsrate, anderen Nachrichten oder neuen Nachrichten, insbesondere anderen oder neuen Nachrichtentypen, eingesetzt werden, muss lediglich das Energiespeichermodul ausgetauscht oder mit einer neuen Software versehen werden, um die neuen Drahtlos-Kommunikationsfunktionen zu leisten. Die Hand-Werkzeugmaschine oder das Sauggerät, die mit dem Energiespeichermodul bestückt sind oder bestückbar sind, bleiben unverändert.

Das Energiespeichermodul und das elektrische Gerät kommunizieren intern über die Datenschnittstelle miteinander.

Das Energiespeichermodul sendet z.B. Sendesignale, die von über die Datenschnittstelle vom elektrischen Gerät empfangene Empfangsinformationen enthalten oder davon abhängig sind. So kann beispielsweise das elektrische Gerät ein Schaltsignal oder eine Schaltinformation an das Energiespeichermodul über die Datenschnittstelle senden, welches seinerseits über die Drahtlos-Kommunikationsschnittstelle ein entsprechendes Sendesignal, beispielsweise eine WLAN-Nachricht, Bluetooth-Nachricht oder dergleichen, sendet.

Auch in umgekehrter Richtung, d.h. von der Extern-Kommunikationsvorrichtung über die Drahtlos-Kommunikationsschnittstelle des Energiespeichermoduls zum elektrischen Gerät funktioniert der Datenfluss. So kann beispielsweise die Extern-Kommunikationsvorrichtung Daten oder sonstige Informationen an die Drahtlos-Kommunikationsschnittstelle senden, welche diese als Empfangssignal empfängt. In Abhängigkeit von den Empfangssignalen sendet das Energiespeichermodul über die Datenschnittstelle entsprechende Sendeinformationen an das elektrische Gerät. So kann beispielsweise die Extern-Kommunikationsvorrichtung einen Bestandteil eines Staubsaugers bilden, der seine Betriebsbereitschaft drahtlos meldet.

Die drahtlose Kommunikation ist vorzugsweise eine Funk-Kommunikation. Aber auch eine optische Kommunikation, beispielsweise über Infrarot oder dergleichen, soll als Drahtlos-Kommunikation verstanden werden.

Die Empfangsinformationen können beispielsweise mindestens eine Betriebsinformation umfassen, die einen Betriebszustand oder eine Betriebsbereitschaft des mit dem Energiespeichermodul verbundenen elektrischen Gerätes anzeigt. So kann beispielsweise dann, wenn das elektrische Gerät betriebsbereit ist, die Betriebsinformation vom elektrischen Gerät über die Datenschnittstelle zum Energiespeichermodul gemeldet werden. Die Betriebsinformation ist beispielsweise eine Schaltinformation. Das Energiespeichermodul seinerseits ist zum Senden einer von der Betriebsinformation abhängigen Sendeinformation, beispielsweise eines Steuersignals, über die Drahtlos-Kommunikationsschnittstelle zum Einschalten oder Ausschalten der Extern-Kommunikationsvorrichtung, insbesondere des Staubsaugers, ausgestaltet. Weiterhin ist es vorteilhaft, wenn das Energiespeichermodul zum Senden einer Anmeldenachricht zur Herstellung einer Kommunikationsverbindung, beispielsweise einer Steuerverbindung, mit der Extern-Kommunikationsvorrichtung ausgestaltet ist. Abhängig vom Betriebszustand oder der Betriebsbereitschaft des durch das Energiespeichermodul mit elektrischer Energie zu versorgenden elektrischen Gerätes, beispielsweise der Hand-Werkzeugmaschine, stellt also das Energiespeichermodul die Kommunikationsverbindung mit der Extern-Kommunikationsvorrichtung her.

Die Betriebsinformation oder die Betriebsbereitschaft des elektrischen Gerätes kann beispielsweise davon abhängig sein, ob ein elektrischer Antriebsmotor und/oder eine Gerätesteuerungseinrichtung zum Steuern des elektrischen Gerätes eingeschaltet ist. Wenn also beispielsweise ein Mikrocontroller, der die Funktionen des elektrischen Gerätes steuert, aktiv ist oder eingeschaltet ist, sendet er eine entsprechende Betriebsinformation oder Betriebsbereitschaftsinformation über die Datenschnittstelle an das Energiespeichermodul. Dieses seinerseits wiederum kann davon abhängig beispielsweise die Kommunikationsverbindung mit der Extern-Kommunikationsvorrichtung herstellen. Die Betriebsinformation oder die Betriebsbereitschaft des elektrischen Gerätes können aber auch davon abhängen, dass die Datenschnittstelle für eine Kommunikation zwischen dem Energiespeichermodul und dem elektrischen Gerät aktiviert und/oder funktionsfähig ist.

Wenn also beispielsweise ein I²C-Bus, der die Datenschnittstelle zwischen Energiespeichermodul und elektrischem Gerät darstellt, in Gang ist oder betriebsbereit ist oder bereits genutzt wird, leitet das Energiespeichermodul davon die Betriebsbereitschaft des elektrischen Gerätes ab. Davon abhängig wiederum kann das Energiespeichermodul beispielsweise die Drahtlos-Kommunikationsschnittstelle einschalten, ausschalten oder dergleichen. Wenn also z.B. die Hand-Werkzeugmaschine eine Stromversorgung für einen Bus der Datenschnittstelle, zum Beispiel den I2C-Bus einschaltet, (High-Level), wird das Energiespeichermodul sozusagen aufgeweckt oder der Controller oder die Steuerung des Energiespeichermoduls eingeschaltet. Diese Funktion wird dazu genutzt, dass der Controller oder die Steuerung des Energiespeichermoduls erkennt, dass die Hand-Werkzeugmaschine eingeschaltet ist und somit den Staubsauger einschalten und ausschalten kann.

Zweckmäßigerweise kann das Energiespeichermodul in Abhängigkeit von dieser Betriebsbereitschaft, beispielsweise der etablierten Buskommunikation über die Datenschnittstelle mit dem elektrischen Gerät, die Anmeldung bei der Extern-Kommunikationsvorrichtung vornehmen. Wenn also beispielsweise eine Handwerkzeugmaschine eingeschaltet wird, nimmt sie die Buskommunikation mit dem Energiespeichermodul auf. Dieses seinerseits stellt die Kommunikationsverbindung zu der Extern-Kommunikationsvorrichtung vor.

Die Betriebsinformation umfasst zweckmäßigerweise mindestens eine Betriebsbereitschaftsinformation, beispielsweise ein Busnachricht, welche zwischen dem Energiespeichermodul und dem elektrischen Gerät im Rahmen einer Initialisierungskommunikation beim Einschalten der Gerätesteuerungseinrichtung oder des elektrischen Antriebsmotors übertragen wird. Wenn also beispielsweise ein Schalter, insbesondere ein Antriebsschalter, des elektrischen Gerätes betätigt wird, führt dies dazu, dass das elektrische Gerät sozusagen das Energiespeichermodul anspricht oder die Buskommunikation in Gang setzt. Dazu muss beispielsweise eine Initialisierungskommunikation stattfinden, bei der sich das Energiespeichermodul und das elektrische Gerät über Betriebsparameter, beispielsweise eine zu liefernde Versorgungsspannung, Maximalwerte von Spannung und Strom oder dergleichen, verständigen. Eine derartige Initialisierungskommunikation kann dazu dienen, dass das Energiespeichermodul sich seinerseits wiederum bei der Extern-Kommunikationsvorrichtung, beispielsweise dem Sauggerät anmeldet.

Weiterhin ist es vorteilhaft, wenn die Betriebsinformation eine Abfrage mindestens einer das Energiespeichermodul kennzeichnenden Information, beispielsweise einer elektrischen Kenngröße, durch das elektrische Gerät bei dem Energiespeichermodul umfasst. So kann beispielsweise das elektrische Gerät beim Energiespeichermodul dessen Maximalstrom oder Maximalspannung, dessen typische Leistung oder dergleichen, abfragen. Die kennzeichnende Information kann aber beispielsweise auch eine Seriennummer, eine Typbezeichnung oder dergleichen, des Energiespeichermoduls sein.

Die Betriebsinformation kann weiterhin ein Spannungssignal umfassen oder dadurch gebildet sein, wobei das Spannungssignal von einer an der Datenschnittstelle von dem Energiespeichermodul für das elektrische Gerät und/oder einer von dem elektrischen Gerät für das Energiespeichermodul bereitgestellten Versorgungsspannung abhängig ist. Wenn also beispielsweise das elektrische Gerät eine Steuerung oder dergleichen des Energiespeichermoduls mit Versorgungsspannung versorgt, kann das Energiespeichermodul daraus ableiten, dass es die Drahtlos-Kommunikationsschnittstelle aktivieren soll. Es ist aber auch möglich, dass die Betriebsinformation ein Spannungssignal umfasst, welches das Energiespeichermodul für das elektrische Gerät bereitstellt. So kann beispielsweise das elektrische Gerät mit einer Logikspannung von dem Energiespeichermodul versorgt werden, mit dem eine Geräte-Steuerungseinrichtung des elektrischen Gerätes mit Strom versorgt wird. Abhängig davon, ob das elektrische Gerät eine derartige Spannung benötigt oder gegebenenfalls auch abfragt, kann das Energiespeichermodul erkennen, dass es zu einer drahtlosen Kommunikation vorgesehen ist. So können beispielsweise elektrische Geräte mit dem Energiespeichermodul versorgt werden, die gar keine Drahtlos-Kommunikationsschnittstelle brauchen oder mit dieser nicht umgehen können. Wenn diese beispielsweise ein Spannungssignal mit einer ersten Spannungshöhe erzeugen, kann das Energiespeichermodul daraus erkennen, dass keine Drahtlos-Kommunikation gewünscht ist. Wenn jedoch das Spannungssignal beispielsweise die Versorgung einer elektrischen Stichsäge oder dergleichen signalisiert, eignet sich diese Betriebsinformation für das Energiespeichermodul dazu, die Drahtlos-Kommunikationsschnittstelle in Gang zu setzen oder zu aktivieren.

Die Betriebsinformation kann aber auch ein Taktsignal einer Busleitung der Datenschnittstelle umfassen oder dadurch gebildet sein. Wenn also beispielsweise die Datenschnittstelle eine Taktleitung umfasst und das Taktsignal abgefragt wird oder einen bestimmten Takt hat, ist dies für das Energiespeichermodul ein Indiz dafür, dass die Drahtlos-Kommunikationsschnittstelle aktiv sein soll oder in einem bestimmten Betriebsmodus betrieben werden soll. Die mindestens eine Empfangsinformation kann beispielsweise eine das elektrische Gerät charakterisierende Spannungsinformation, beispielsweise eine Spannungshöhe, umfassen oder dadurch gebildet sein. Diese Empfangsinformation oder Betriebsinformation weicht beispielsweise von einer Spannungsinformation ab, die von einem Ladegerät bereitgestellt wird.

Wenn das Energiespeichermodul beispielsweise ein elektrisches Gerät mit Strom versorgt, ist das Spannungssignal, welches als Betriebsinformation oder Empfangsinformation dient, auf einem niedrigeren Pegel, beispielsweise 3,3 Volt als in einer Situation, bei der das Energiespeichermodul beispielsweise an einem Ladegerät angesteckt ist oder an ein Ladegerät angekoppelt ist. Ein Ladegerät kann beispielsweise eine Spannungsinformation oder ein Spannungssignal an der Datenschnittstelle von 5 Volt bereitstellen.

Anhand einer typischen oder charakteristischen Kommunikation, beispielsweise einer Initialisierungskommunikation, kann das Energiespeichermodul weiterhin erkennen, ob es mit einem elektrischen Gerät kommuniziert, welches die Drahtlos-Kommunikationsschnittstelle nutzt oder nutzen soll, zum Beispiel einer elektrischen Säge oder mit einem Ladegerät kommuniziert. So wird beispielsweise ein elektrisches Gerät, welches mit Strom versorgt wird, sich nicht um die Maximalspannung der einzelnen Speicherzellen des Energiespeichermoduls kümmern und diese entsprechend nicht abfragen. Ein Ladegerät hingegen fragt die Maximalspannung der jeweiligen Speicherzellen ab um den Ladevorgang entsprechend zu optimieren.

Mithin ist es also vorteilhaft, wenn das Energiespeichermodul zum Aktivieren oder Deaktivieren der Kommunikation mit der Extern-Kommunikationsvorrichtung in Abhängigkeit davon ausgestaltet ist, ob das über die Geräteschnittstelle mit dem Energiespeichermodul verbundene Gerät ein zum elektrischen Aufladen des Energiespeichers vorgesehenes Ladegerät oder ein von dem Energiespeichermodul mit elektrischer Energie zu versorgendes Gerät ist oder ob die Geräteschnittstelle ungenutzt ist. Eine Deaktivierung kann eine vollständige Abschaltung der Extern-Kommunikationsvorrichtung sein. Es ist aber auch möglich, dass die deaktivierte Extern-Kommunikationsvorrichtung für eine vorbestimmte Kommunikation weiterhin aktiv bleibt, zum Beispiel zum Laden von Programmdaten, für eine Parametrierung oder dergleichen. Eine Deaktivierung kann also beispielsweise bedeuten, dass zwar keine steuernde Kommunikation im Sinne eines Empfangens und/oder eines Sendens von Schaltinformationen möglich ist, aber eine drahtlose Kommunikation mit mindestens einer anderen Einrichtung, beispielsweise einem Konfigurationsmodul, möglich ist. Das Konfigurationsmodul sendet beispielsweise Konfigurationsparameter, Programme oder dergleichen, die das Energiespeichermodul auch bei deaktivierter Kommunikation mit der Extern-Kommunikationsvorrichtung empfängt.

Wenn die Geräteschnittstelle ungenutzt ist, also kein elektrisches Gerät daran angeschlossen ist (kein Staubsauger, keine Werkzeugmaschine oder dergleichen), kann das Energiespeichermodul die Kommunikation mit der Extern-Kommunikationsvorrichtung deaktivieren.

Ein bevorzugtes Konzept sieht vor, dass das Energiespeichermodul eine, insbesondere optische und/oder akustische, Anzeigeeinrichtung zur Ausgabe mindestens einer die drahtlose Kommunikation zwischen dem Energiespeichermodul und der Extern-Kommunikationsvorrichtung und/oder die Datenkommunikation mit dem elektrischen Gerät betreffenden Kommunikationsinformation aufweist.

Beispielsweise kann die Anzeigeeinrichtung eine LED-Anzeige oder dergleichen umfassen. Wenn das Energiespeichermodul mit der Extern-Kommunikationsvorrichtung kommuniziert kann die Anzeigeeinrichtung die funktionierende Kommunikation oder die aktuell in Gang gesetzte Kommunikation signalisieren. Weiterhin kann die Anzeigeeinrichtung beispielsweise einen Anmeldeprozess oder einen Autorisierungsprozess zwischen der Extern-Kommunikationsvorrichtung und der Drahtlos-Kommunikationsschnittstelle darstellen. Selbstverständlich kann auch eine akustische Ausgabe vorgesehen sein, beispielsweise ein Signalton oder dergleichen. Weiterhin ist es vorteilhaft, wenn die Kommunikation zwischen dem elektrischen Gerät und dem Energiespeichermodul anhand der Anzeigeeinrichtung anzeigbar ist.

Vorteilhaft ist vorgesehen, dass die Anzeigeeinrichtung in einem ersten Betriebsmodus zur Ausgabe mindestens einer elektrischen Kenngröße des Energiespeichermoduls, insbesondere eines Ladezustands des elektrischen Energiespeichers, und in einem zweiten Betriebsmodus zur Ausgabe der mindestens einen Kommunikationsinformation ausgestaltet ist. Die Anzeigeeinrichtung kann dementsprechend auch lokale Informationen des Energiespeichermoduls signalisieren. So kann beispielsweise ein Ladezustand bzw. eine Kapazitätsanzeige des elektrischen Energiespeichers in dem ersten Betriebsmodus angezeigt werden. Im zweiten Betriebsmodus kann die Kommunikationsinformation angezeigt werden. Wenn also beispielsweise die drahtlose Kommunikation mit der Extern-Kommunikationsvorrichtung etabliert wird, die Autorisierung oder Anmeldung stattfindet, kann dies im zweiten Betriebsmodus signalisiert werden. Im ersten Betriebsmodus hat die Anzeigeeinrichtung beispielsweise eine andere Farbe oder Informationsfolge als im zweiten Betriebsmodus.

Ein bevorzugtes Konzept sieht vor, dass die anhand von Empfangsinformationen des elektrischen Geräts generierten Sendesignale mindestens ein Schaltsignal zum Einschalten und/oder Ausschalten der Extern-Kommunikationsvorrichtung, insbesondere des Staubsaugers, und/oder mindestens eine Konfigurationsnachricht zur Konfiguration der Extern-Kommunikationsvorrichtung, insbesondere des Staubsaugers, in Abhängigkeit von einer das elektrische Gerät kennzeichnenden Größe umfassen. Wie bereits erwähnt, können die Empfangsinformationen an der Datenschnittstelle, die vom elektrischen Gerät stammen, vom Energiespeichermodul dazu genutzt werden, ein Schaltsignal zum Einschalten oder Ausschalten der Extern-Kommunikationsvorrichtung beispielsweise des Staubsaugers, zu senden. Dabei sei dies so verstanden, dass die Extern-Kommunikationsvorrichtung zwar betriebsbereit bleibt, aber beispielsweise ein Saugmotor des Staubsaugers abgeschaltet oder eingeschaltet wird. Die mindestens eine Konfigurationsnachricht kann beispielsweise zur Konfiguration einer Arbeitseinstellung, zum Beispiel einer Saugleistung, der Extern-Kommunikationsvorrichtung dienen. Eine derartige Konfiguration wird nachfolgend deutlicher:
Ein bevorzugtes Konzept sieht vor, dass das an das Energiespeichermodul angeschlossene elektrische Gerät zur Zusammenwirkung mit einem Staubsauger vorgesehen und ausgestaltet ist, wobei der Staubsauger die Extern-Kommunikationsvorrichtung aufweist oder bildet. Die Extern-Kommunikationsvorrichtung kann beispielsweise direkt durch den Staubsauger gebildet sein, der eine entsprechende Drahtlos-Kommunikationsvorrichtung aufweist. Es ist aber auch möglich, dass die Extern-Kommunikationsvorrichtung als ein Modul ausgestaltet ist, welches mit einem Staubsauger in Verbindung gebracht werden kann. Der Staubsauger hat beispielsweise eine Modulschnittstelle, insbesondere in der Art der eingangs genannten DE 10 2012 003 073 A1.

Insbesondere im Zusammenhang mit der obigen Maßnahme ist es vorteilhaft, wenn das Energiespeichermodul zum Schalten, insbesondere Abschalten, und/oder zum Aktivieren oder Deaktivieren des Staubsaugers in Abhängigkeit davon ausgestaltet ist, ob das über die Geräteschnittstelle mit dem Energiespeichermodul verbundene Gerät ein zur Zusammenwirkung mit dem Staubsauger geeignetes und/oder die Absaugfunktion des Staubsauger benötigendes Gerät ist. Wenn also das mit dem Energiespeichermodul verbundene Gerät ein Ladegerät ist, wird ein Staubsauger nicht benötigt, d.h. in diesem Fall ist beispielsweise die Drahtlos-Kommunikationsschnittstelle des Energiespeichermoduls inaktiv. Wenn jedoch das durch das Energiespeichermodul versorgte Gerät eine Stichsäge oder eine andere Hand-Werkzeugmaschine ist, wird die Absaugfunktion benötigt. Dann ist die Drahtlos-Kommunikationsschnittstelle des Energiespeichermoduls aktiv.

Bei dem Energiespeichermodul ist vorteilhaft vorgesehen, dass es zum Senden einer die Extern-Kommunikationsvorrichtung informierenden Trennungssignals, insbesondere eines Abschaltsignals, über die Drahtlos-Kommunikationsschnittstelle bei einer Trennung von dem mit elektrischer Energie zu versorgenden Gerät und/oder bei Unterschreitung eines vorbestimmten Ladezustandswerts des Energiespeichers ausgestaltet ist. Wenn also beispielsweise das Energiespeichermodul von der Hand-Werkzeugmaschine getrennt wird oder nicht mehr genügend Energie zur Versorgung der Hand-Werkzeugmaschine liefern kann, sendet es vorteilhaft ein Abschaltsignal über die Drahtlos-Kommunikationsschnittstelle. In diesem Fall muss beispielsweise ein Staubsauger, der über die Drahtlos-Kommunikationsschnittstelle angesteuert wird, nicht mehr weiter betrieben werden. Die Extern-Kommunikationsvorrichtung schaltet beispielsweise dann ein Saugaggregat des Staubsaugers ab.

Ein vorteilhaftes Konzept sieht vor, dass das Energiespeichermodul zum Übertragen mindestens eines über die Drahtlos-Kommunikationsschnittstelle empfangenen Softwaremoduls oder Programmmoduls und/oder Konfigurationsdaten über die Datenschnittstelle an das elektrische Gerät ausgestaltet ist. So kann beispielsweise ein Software-Update für die Geräte-Steuerungseinrichtung des elektrischen Gerätes über die Drahtlos-Kommunikationsschnittstelle des Energiespeichermoduls empfangen werden. Die Konfigurationsdaten können beispielsweise Betriebsparameter, insbesondere maximale Drehzahlen, Laufzeiten, Nutzströme oder dergleichen, für das Energiespeichermodul und/oder das elektrische Gerät enthalten.

Selbstverständlich kann die Drahtlos-Kommunikationsschnittstelle auch für ein Update des Energiespeichermoduls und/oder die Drahtlos-Kommunikationsschnittstelle selbst vorgesehen und/oder ausgestaltet sein.

Das Energiespeichermodul kann auch zum Übertragen von von dem elektrischen Gerät empfangener Protokolldaten über die Drahtlos-Kommunikationsschnittstelle ausgestaltet sein, beispielsweise zum Übertragen von Fehlerspeicherdaten, Log-Dateien oder dergleichen.

Vorzugsweise werden Programmmodule oder Softwaremodule und/oder Protokolldaten verschlüsselt über die Drahtlos-Kommunikationsschnittstelle übertragen.

Bevorzugt umfassen die Empfangsinformationen mindestens eine Statusinformation, zum Beispiel eine Fehlerinformation, eine Schaltstellung eines Schalters, zum Beispiel eines Potentiometers, eines Einschalters oder Ausschalters oder dergleichen, des elektrischen Geräts und/oder mindestens eine Identifizierungsinformation, zum Beispiel eine Seriennummer, des elektrischen Geräts.

Das Energiespeichermodul ist bevorzugt zum Senden mindestens einer Empfangsinformation über die Drahtlos-Kommunikationsstelle in Abhängigkeit eines Übergangs von einem Trennungszustand in einem Betriebszustand der Geräteschnittstelle des Energiespeichermoduls oder umgekehrt ausgestaltet. In dem Trennungszustand ist die Geräteschnittstelle elektrisch und/oder mechanisch von dem elektrischen Gerät getrennt, im Betriebszustand mechanisch und/oder elektrisch mit dem elektrischen Gerät verbunden. Beispielsweise kann das Energiespeichermodul beim Übergang vom Trennungszustand in den Betriebszustand über die Datenschnittstelle von dem elektrischen Gerät Empfangsinformationen erhalten, insbesondere eine Schaltstellung eines Potentiometers, Einschalters oder dergleichen und über die Drahtlos-Kommunikationsschnittstelle versenden. Ferner kann das Energiesparmodul beispielsweise beim Übergang vom Betriebszustand in den Trennungszustand eine Information über die Drahtlos-Kommunikationsschnittstelle übermitteln, dass es von dem elektrischen Gerät getrennt ist.

Eine oder mehrere vorbestimmte von dem elektrischen Gerät über die Datenschnittstelle empfangene Empfangsinformationen, insbesondere nicht-sicherheitsrelevante und/oder nicht geheimzuhaltende Empfangsinformationen, können ohne weiteres, insbesondere unverschlüsselt, im Rahmen einer Broadcast-Kommunikation, Advertising-Kommunikation oder dergleichen von dem Energiespeichermodul über seine Drahtlos-Kommunikationsschnittstelle versendet werden. So kann beispielsweise ein Smartphone oder eine andere Extern-Kommunikationsvorrichtung Statusinformationen, mindestens eine Identifizierungsinformation oder dergleichen des elektrischen Geräts über das Energiespeichermodul empfangen.

Eine derartige Broadcast-Kommunikation führt das Energiespeichermodul insbesondere dann durch, wenn es vom Trennungszustand in den Betriebszustand übergeht und somit erstmals die vorbestimmten Empfangsinformationen von der Werkzeugmaschine, dem Staubsauger oder dem sonstigen elektrischen Gerät empfängt.

Es ist aber auch möglich, dass das Energiesparmodul nach einer vorbestimmten Zeit nach dem Übergang vom Trennungszustand in den Betriebszustand und/oder periodisch und/oder zyklisch die vorbestimmten Empfangsinformationen im Rahmen der Broadcast-Kommunikation versendet.

Bevorzugt ist es, wenn das elektrisch Gerät, beispielsweise die Hand-Werkzeugmaschine über die Datenschnittstelle Informationen sendet, die für eine passende automatische Absaugung nötig sind. So kann das elektrische Gerät beispielsweise seinen Typ, eine Staubklasse, eine jeweiligen Betriebsstellung oder einen Betriebszustands des Antriebsmotors (Drehzahl oder dergleichen), seine aktuelle Leistungsaufnahme oder dergleichen über die Datenschnittstelle an das Energiespeichermodul melden. Weiterhin ist es möglich, dass lokal von dem elektrischen Gerät erfasste Daten, beispielsweise ein Anpressdruck, ein aktuelles Staubaufkommen oder dergleichen, vom elektrischen Gerät über die Datenschnittstelle an das Energiespeichermodul gemeldet werden. Das Energiespeichermodul kann über die Datenschnittstelle empfangene Daten an der Drahtlos-Kommunikationsschnittstelle ausgeben, so dass die Extern-Kommunikationsvorrichtung, insbesondere ein Staubsauger, sich auf die entsprechenden Funktionen einstellen kann.

Weiterhin ist es möglich, dass die Maschine beispielsweise auch ein Schaltsignal, beispielsweise ein Einschaltsignal, Ausschaltsignal oder dergleichen, über die Datenschnittstelle an das Energiespeichermodul sendet, welches seinerseits wiederum eine entsprechende Sendeinformation an der Drahtlos-Kommunikationsschnittstelle für die Extern-Kommunikationsvorrichtung, beispielsweise den Staubsauger, ausgibt. So kann beispielsweise das elektrische Gerät, wenn es ein nicht zur Staubabsaugung geeignetes oder eine Staubabsaugung nicht benötigendes Gerät ist, insbesondere ein Schraubgerät oder dergleichen ist, oder wenn das elektrische Gerät aufgrund anderer Betriebsparameter weiß oder erkannt hat, dass es keine Staubabsaugung braucht (beispielsweise weil gerade ein Staubsack am elektrischen Gerät angeschlossen ist), über die Datenschnittstelle ein entsprechendes Signal oder ein entsprechende Sendeinformation an das Energiespeichermodul senden, welches seinerseits wiederum diese Daten vorzugsweise an der Drahtlos-Kommunikationsschnittstelle für die Extern-Kommunikationsvorrichtung ausgibt.

Vorzugsweise ist vorgesehen, dass das das Energiespeichermodul ein Modulgehäuse und einen in dem Modulgehäuse aufgenommenen Energiespeicher, insbesondere eine Anordnung mit mindestens einer wiederaufladbaren elektrischen Speicherzelle, zur Bereitstellung elektrischer Energie zur Energieversorgung der Werkzeugmaschine oder des Staubsauger vorgesehenen Versorgungskontakten aufweist. Die elektrischen Speicherzellen, insbesondere eine Aggregation oder eine Anordnung mehrerer elektrischer Speicherzellen, sind beispielsweise durch ein Ladegerät aufladbar. Es ist aber auch möglich, dass der Energiespeicher beispielsweise eine Brennstoffzelle oder dergleichen anderen elektrischen Speicher oder chemischen Speicher, welcher elektrische Energie am Ende bereitstellen kann, aufweist.

Das Energiespeichermodul weist zweckmäßigerweise ein Modulgehäuse mit einer Geräteschnittstelle zur lösbaren Verbindung mit der Werkzeugmaschine auf. Die Geräteschnittstellen des Energiespeichermoduls zu der Werkzeugmaschine oder des Staubsaugers haben zueinander passende Versorgungskontakte zur Übertragung von elektrischer Energie und/oder Datenkontakte, insbesondere Buskontakte, zur Übertragung von Daten.

Die Werkzeugmaschine ist eine Staub und/oder Partikel erzeugende Werkzeugmaschine, beispielsweise eine Sägemaschine, eine Bohrmaschine, eine Fräsmaschine, eine Schleifmaschine oder dergleichen. Insbesondere ist die Werkzeugmaschine eine Hand-Werkzeugmaschine. Die Werkzeugmaschine weist zweckmäßigerweise einen Saugauslass, zum Beispiel einen Anschlussstutzen, zum Anschließen eines Saugschlauchs auf.

Der Staubsauger könnte auch allgemein als Sauggerät bezeichnet werden. Der Staubsauger kann selbst verständlich nicht nur Staub, sondern auch gröbere Partikel, die die Werkzeugmaschine erzeugt, saugen.

Bevorzugt ist es, wenn die Steuerungsverbindung nur dann herstellbar ist oder hergestellt wird, wenn der Staubsauger und die Werkzeugmaschine anhand des Saugschlauchs oder eines Saugschlauchs miteinander strömungsverbunden sind.

An der Werkzeugmaschine und/oder dem Staubsauger können Sensoren oder Erkennungsmittel vorgesehen sein, die den Anschluss des Saugschlauches erkennen. Nur dann, wenn tatsächlich ein Saugschlauch angeschlossen ist, wird die Steuerverbindung hergestellt.

Nachfolgend werden Ausführungsbeispiele der Erfindung anhand der Zeichnung erläutert. Es zeigen:
- Figur 1: eine perspektivische Schrägansicht eines erfindungsgemäßen Systems umfassend eine Hand-Werkzeugmaschine sowie einen Staubsauger,

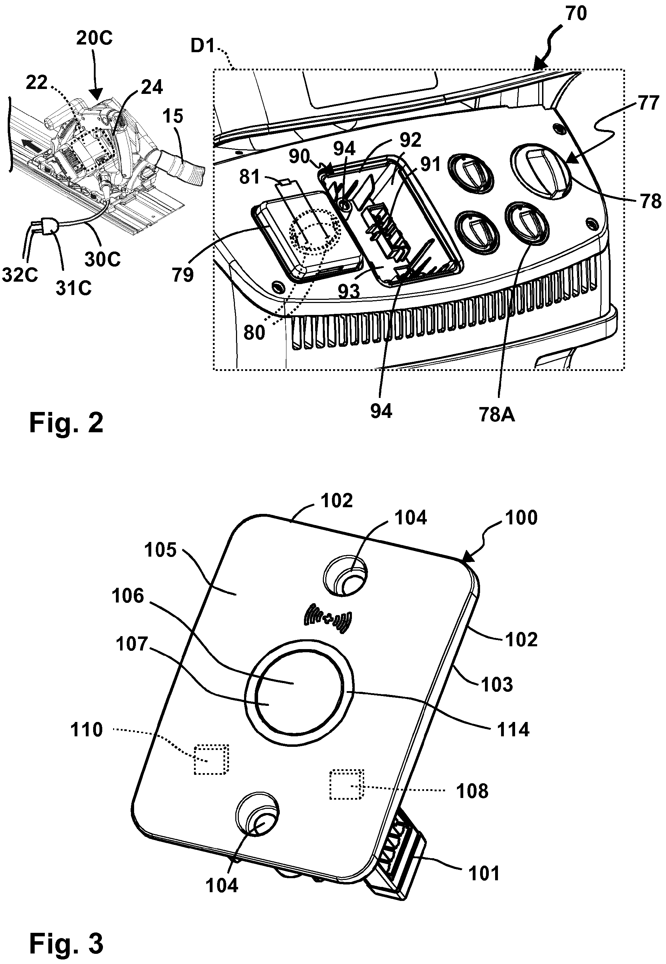

- Figur 2: eine Teilansicht etwa entsprechend einem Detail D1 des Staubsaugers gemäß Figur 1,
- Figur 3: eine perspektivische Schrägansicht eines Kommunikationsmoduls des Staubsaugers gemäß Figur 1,
- Figur 4: eine Geräteschnittstelle einer Werkzeugmaschine gemäß Figur 1,
- Figur 5: ein Energiespeichermodul des Systems gemäß Figur 1 perspektivisch schräg dargestellt,
- Figur 6: das Energiespeichermodul gemäß Figur 5 von der anderen Seite perspektivisch dargestellt,
- Figur 7: ein Ladegerät zum Aufladen des Energiespeichermodul gemäß Figuren 5, 6
- Figur 8: ein Kommunikationsmodul des Systems gemäß Figur 1 in perspektivischer Schrägansicht,
- Figur 9: das Kommunikationsmodul gemäß Figur 8, jedoch mit einer Befestigungseinrichtung zur Befestigung an einem schematisch dargestellten Saugschlauch,
- Figur 10: eine schematische Funktionsdarstellung des Kommunikationsmoduls gemäß Figur 9, 10,

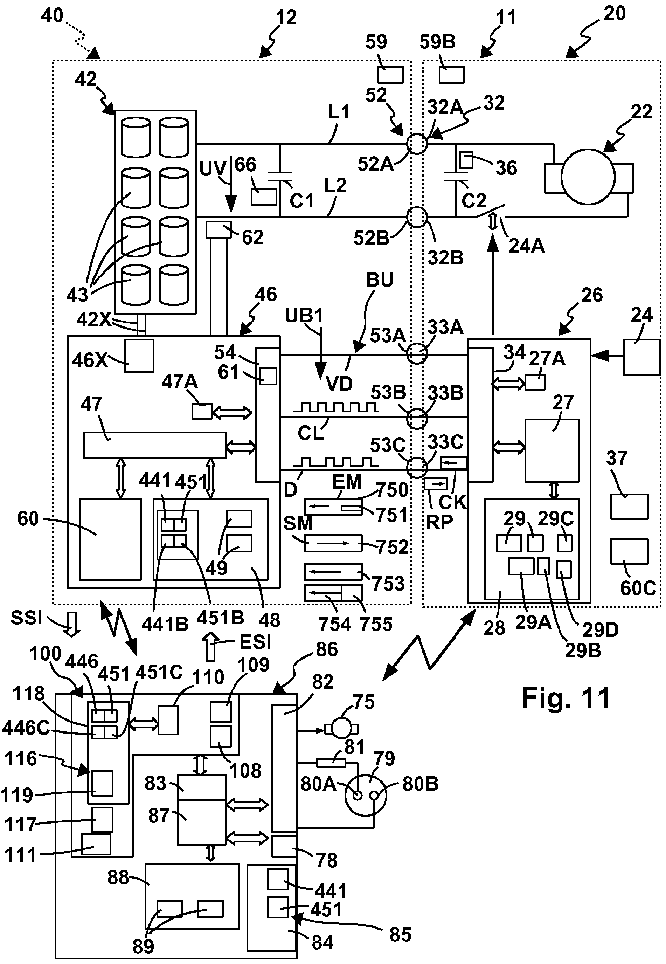

- Figur 11: ein schematisches Schaltbild des Energiespeichermoduls sowie einer Hand-Werkzeugmaschine und eines Kommunikationsmoduls gemäß Figur 1,
- Figur 12: ein schematisches Schaltbild des Energiespeichermoduls gemäß Figur 4 in Zusammenwirkung mit dem Ladegerät gemäß Figur 7,
- Figur 13: eine perspektivische Darstellung des anderen Energiespeichermoduls gemäß Figur 1 im auf das Ladegerät gemäß Figur 7 aufgesetzten Zustand,

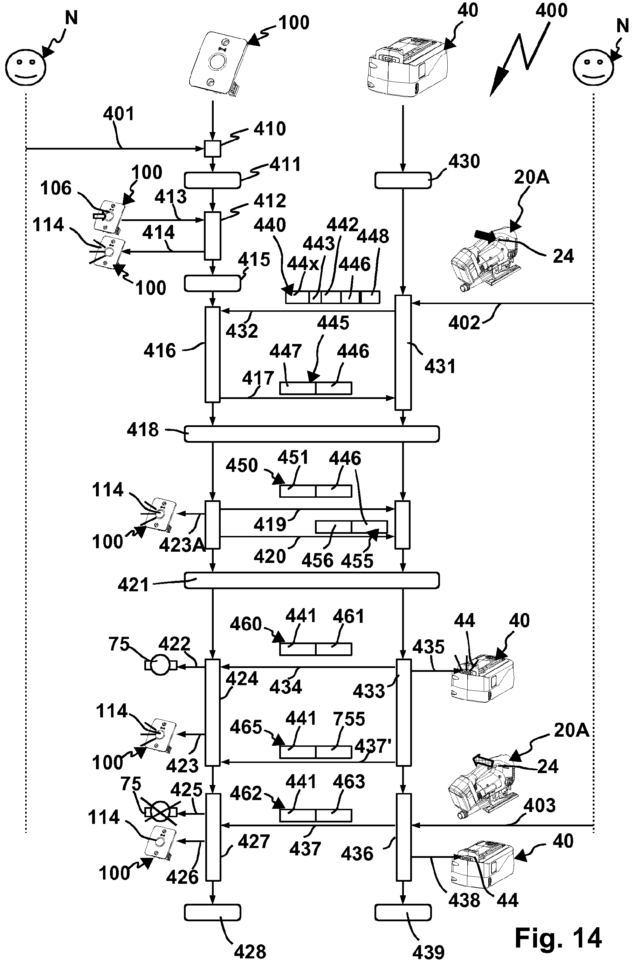

- Figur 14: ein Kommunikationsdiagramm zwischen dem Staubsauger gemäß Figur 1 und einem Energiespeichermodul,
- Figur 15: ein schematisch dargestelltes System mit einem in einer Transportbox angeordneten und einem Energiespeicher betreibbaren Staubsauger,
- Figur 16: ein Diagramm mit einer Relation zwischen einer Signalstärke Information und einer Antwortzeit.

Gleiche und gleichartige Komponenten sind nachfolgend teilweise mit denselben oder durch Hinzufügung von A, B etc. kenntlich gemachte ähnliche Bezugszeichen versehen.

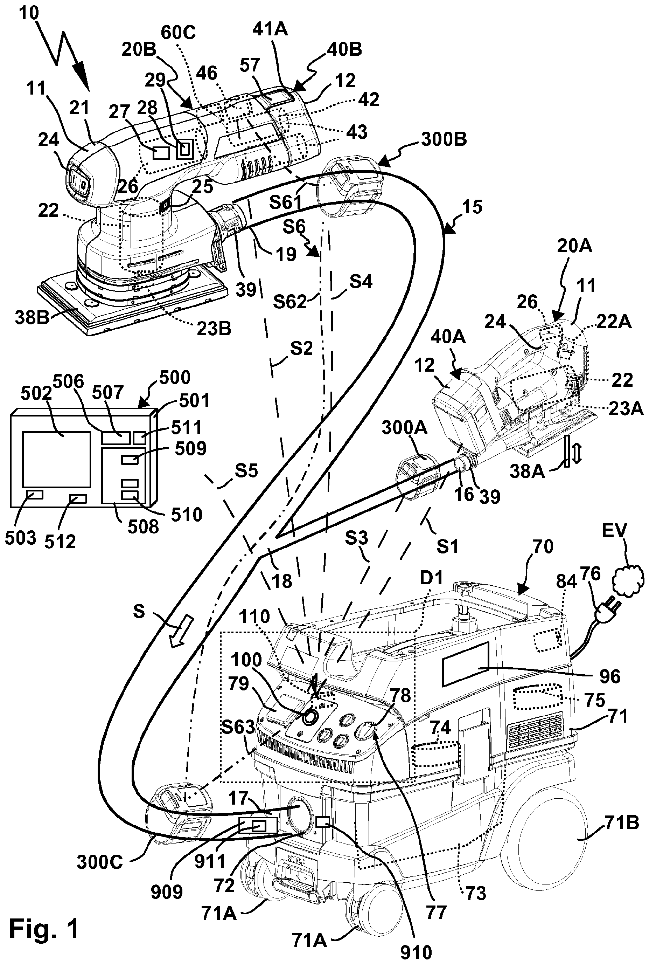

Ein in Figur 1 teilweise schematisch dargestelltes System 10 umfasst Werkzeugmaschinen 20A, 20B die von Energiespeichermodulen 40A, 40B mit elektrischer Energie versorgt wird. Die Werkzeugmaschine 20A, 20B sind Staub oder Partikel erzeugende Werkzeugmaschinen und insbesondere Hand-Werkzeugmaschinen. Bei der Werkzeugmaschine 20B handelt es sich beispielsweise um ein Schleifgerät, bei der Werkzeugmaschine 20A um eine Säge, insbesondere eine Stichsäge, wobei auch eine Oberfräse oder dergleichen andere Staub erzeugende oder Partikel erzeugende elektrische Werkzeugmaschine oder Hand-Werkzeugmaschine ohne weiteres möglich wäre.

In einem Maschinengehäuse 21A, 21B der Werkzeugmaschine 20A, 20B ist ein Antriebsmotor 22 angeordnet, der zum Antreiben einer Werkzeugaufnahme 23A, 23B und somit eines an der Werkzeugaufnahme 23A, 23B angeordneten Werkzeugs 38A, 38B vorgesehen ist. Bei dem Werkzeug 38A handelt es sich beispielsweise um ein Sägewerkzeug, bei dem Werkzeug 38B um ein Schleifpad. Der Antriebsmotor 22 kann das Werkzeug 238A, 38B direkt oder über ein Getriebe antrieben, z.B. ein Getriebe 22A für eine Oszillationsbewegung.

Die Werkzeugmaschine 20A, 20B kann anhand eines Schaltelements 24, beispielsweise eines Einschalters/Ausschalters, eingeschaltet und ausgeschaltet werden. Ein weiteres Schaltelement 25 ist beispielsweise als ein Drehzahlregler oder Drehzahlsteller ausgestaltet. Möglich ist eine Ausführungsform, bei der beispielsweise durch einen entsprechenden Betätigungshub des Schaltelements 24 die Drehzahl des Antriebsmotors 22 veränderbar ist.

Die Hand-Werkzeugmaschine 20A, 20B weist eine Steuerungseinrichtung 26 zur Ansteuerung des Antriebsmotors 22 auf. Die Steuerungseinrichtung 26 umfasst beispielsweise einen Prozessor 27 und einen Speicher 28. In dem Speicher 27 ist ein Programmmodul oder sind mehrere Programmmodule 29 gespeichert, deren Programmcode durch den Prozessor 27 ausführbar ist, um die Hand-Werkzeugmaschine 20A, 20B zu steuern und/oder mit den Energiespeichermodulen 40A, 40B zu kommunizieren..

Die Werkzeugmaschine 20A, 20B weist einen Absauganschluss oder Saugauslass 39 zum Anschluss eines Saugschlauches 15 auf, über den beim Betrieb des Werkzeugs 38A, 38B anfallender Staub abgesaugt werden kann. Der Saugauslass 39, beispielsweise ein Anschlussstutzen, kommuniziert mit an oder in dem Werkzeug 38B angeordneten Absaugöffnungen, die man in der Zeichnung nicht sieht. Somit kann in an sich bekannter und üblicher Weise Staub vom Werkzeug 38A, 38B unmittelbar weg abgesaugt werden.

Ein Staubsauger 70 des Systems 10 weist ein Saugergehäuse 71 auf, welches beispielsweise auf Rollen 71A, 71B auf einem Untergrund abstellbar und/oder abrollbar ist. Das Sauggerät 70 ist ein mobiles Sauggerät. Der Staubsauger 70 könnte aber auch die Gestalt eines stapelbaren Staubsaugers aufweisen, mithin ein Stapelgehäuse aufweisen, und/oder eine kastenförmige Gestalt haben. Die Rollen 71A, 71B sind optional.

Der Staubsauger 70 weist an der Frontseite des Staubsaugergehäuses 71 einen Saugeinlass 72 auf, an die der Saugschlauch 15 anschließbar ist. Der Saugschlauch 15 erstreckt sich mit einem Längsende 16, das an den Saugauslass 39A angeschlossen ist, und einem anderen Längsende 17, das an den Saugeinlass 72 angeschlossen ist, zwischen der Werkzeugmaschine 20A und dem Staubsauger 70. Die Werkzeugmaschine 20B ist über eine Verzweigung 18 des Saugschlauchs 15 an den Staubsauger 70 angeschlossen. Die Verzweigung 18 verzweigt zu dem Längsende 16 und zu einem Längsende 19, welches an den Saugauslass 39A der Werkzeugmaschine 20B angeschlossen ist. Selbstverständlich ist die Verzweigung 18 des Saugschlauchs 15 optional. In an sich bekannter Weise kann auch ein Saugschlauch vorgesehen sein, der sich direkt zwischen einem Saugauslass 39 und dem Saugeinlass 72 erstreckt, ohne eine Verzweigung aufzuweisen.

In dem Saugergehäuse 71 ist ein Schmutzsammelraum 73 vorgesehen, in den aus einem Saugstrom S, der über den Saugauslass 72 eingesaugt wird, abgesonderter Staub und sonstige Partikel aufgenommen werden können. Oberhalb des Schmutzsammelraums 73 ist vorzugsweise ein Filter 74 vorgesehen. Im Schmutzsammelraum 73 kann aber auch zusätzlich oder anstelle des Filters 74 ein Filtersack angeordnet sein, der zum Sammeln von Schmutz und Partikeln geeignet ist. Der bereits Saugstrom S, der durch den Saugeinlass 72 eingesaugt wird, ist durch ein Saugaggregat 75 erzeugbar. Das Saugaggregat 75 wird beispielsweise anhand einer Netzanschlusseinrichtung 76 mit elektrischem Strom versorgt. Die Netzanschlusseinrichtung 76 umfasst beispielsweise ein Anschlusskabel und einen Anschlussstecker zum Anschluss an ein elektrisches Versorgungsnetz EV, insbesondere mit 220 V oder 110V Wechselstrom.

Die Funktionen des Staubsaugers 70 sind durch eine Bedienelementanordnung 77 steuerbar. Die Bedienelementanordnung umfasst beispielsweise ein Schaltelement 78, mit dem der Staubsauger eingeschaltet oder ausgeschaltet oder in einen Automatik-Betrieb geschaltet werden kann, bei dem beispielsweise ein über eine Steckdose 79 führender Stromfluss zum Einschalten und Ausschalten des Saugaggregats 75 führt. Die Steckdose 79 ist zweckmäßigerweise an der Bedienelementanordnung 77 vorgesehen. In die Steckdose 79 kann ein elektrischer Verbraucher, vorzugsweise eine elektrische Hand-Werkzeugmaschine 20C angeschlossen werden.

Die Steckdose 79 weist Kontakte 80, insbesondere Buchsen, auf, in die Kontakte 32C eines Steckers 31C der Hand-Werkzeugmaschine 20C einsteckbar sind. Der Stecker 31C ist an einem Anschlusskabel angeordnet, welches ein Bestandteil einer Netzanschlusseinrichtung 30C ist. Wenn einem Bediener ein Schaltelement 24 der Hand-Werkzeugmaschine 20C zum Bestromen von deren Antriebsmotor 22, mit dem beispielsweise ein Sägeblatt antriebbar ist, betätigt, fließt Strom über die Netzanschlusseinrichtung 30C, der vom Staubsauger 70 über die Steckdose 79 bereitgestellt wird. Dieser Stromfluss ist durch einen Stromsensor 81 in an sich bekannter Weise erfassbar. Eine Steuerungseinrichtung 86 des Staubsaugers 70 schaltet bei einem Stromfluss über die Steckdose 79 in an sich bekannter Weise das Saugaggregat 75 ein und bei einem Ende des Betriebs der Hand-Werkzeugmaschine 20C, also wenn der Stromsensor 81 kein Stromfluss mehr ermittelt, das Saugaggregat 25 ab, zweckmäßigerweise mit einer Nachlaufzeit.

Der Stromsensor 82 ist beispielsweise an eine Ein-/Ausgabeschnittstelle 82 der Steuerungseinrichtung 80 angeschlossen. Die Ein-/Ausgabeschnittstelle 82, beispielsweise eine leistungselektronische Schnittstelle, dient weiterhin zur Ansteuerung des Saugaggregats 75.

Die Steuerungseinrichtung 86 weist weiterhin einen Prozessor 87 sowie einen Speicher 88 auf, in dem eines oder mehrere Programmmodule 89 gespeichert sind. Das mindestens eine Programmmodul 89 weist einen Programmcode auf, der durch den Prozessor 87 ausführbar ist und unter anderem eine oder mehrere der nachfolgenden Funktionen ermöglicht.

Die Steckdose 79 ist über den Staubsauger 70 an das Versorgungsnetz EV anschließbar oder auch direkt an das Versorgungsnetz EV anschließbar, nämlich anhand der Netzanschlusseinrichtung 30C.

Die Werkzeugmaschinen 20A, 20C hingegen sind für einen leitungslosen oder drahtlosen Betrieb ausgestattet. Sie sind nämlich anhand der Energiespeichermodule 40A, 40B mit elektrischem Strom versorgbar.

Die Energiespeichermodule 40A, 40B sind funktional ähnlich aufgebaut, wobei mechanische Unterschiede und/oder elektrische Unterschiede hinsichtlich der Stromversorgungskapazität, Spannung oder dergleichen, ohne weiteres existieren können.

Die Energiespeichermodule 40A, 40B weisen Modulgehäuse 41A, 41B auf, in denen Energiespeicher 42 angeordnet sind. Die Energiespeicher 42 weisen eine oder mehrere Speicherzellen 43, insbesondere eine Speicherzellenanordnung mit mehreren Speicherzellen 43, auf, die wiederaufladbar sind.

Anhand einer Anzeigeeinrichtung 44, die optional bei dem Energiespeichermodul 40A vorhanden ist, kann ein Ladezustand des Energiespeichers 42 ausgegeben werden, beispielsweise akustisch und/oder optisch. Die Anzeigeeinrichtung 44 umfasst beispielsweise einen Lautsprecher 44A, der einen niederen Ladezustand signalisieren kann, z.B. anhand eines Warntons. Bevorzugt ist bei der Anzeigeeinrichtung 44 eine Anordnung von einer oder mehreren Leuchten 45, beispielsweise Leuchten 45A, 45B, 45C und 45D. Bei den Leuchten 45A-45D handelt es sich vorzugsweise um LEDs.

Die Funktionen der Energiespeichermodule 40A, 40B sind durch Steuerungseinrichtungen 46 steuerbar.

Die Steuerungseinrichtungen 46 können unmittelbar durch den Energiespeicher 42 und/oder eine oder mehrere der Speicherzellen 43 mit elektrischer Energie versorgbar sein. Beispielsweise können zwischen dem Energiespeicher 42 und der Steuerungseinrichtung 46 Versorgungsleitungen 42X vorgesehen sein. Eine Steuerungseinrichtung 46 kann zudem noch ein Versorgungsmodul 46X zur Adaption einer von dem Energiespeicher 42 bereitgestellten Spannung bzw. einem von dem Energiespeicher 42 bereitgestellten Versorgungsstrom aufweisen. Somit ist eine jeweilige Steuerungseinrichtung 46 lokal mit elektrischer Energie versorgbar, unabhängig davon, ob das Energiespeichermodul 40 mit einem elektrischen Gerät, beispielsweise einem Ladegerät oder einer Werkzeugmaschine oder einem Staubsauger, verbunden ist.

Die Steuerungseinrichtungen 46 weisen beispielsweise einen Prozessor 47 einen Speicher 48 auf, in welchem mindestens ein Programmmodul 49 gespeichert ist. Beispielsweise kann die Steuerungseinrichtung 46 mit der Steuerungseinrichtung 26 der Hand-Werkzeugmaschine 20A, 20B kommunizieren. Der Prozessor 47 kann Programmcode der Programmmodule 49 ausführen, unter anderem um die nachfolgend noch im Detail erläuterten Funktionen zu realisieren.

Die Energiespeichermodule 40A, 40B sind lösbar mit den Werkzeugmaschinen 20A, 20B anhand von Geräteschnittstellen 30 der Werkzeugmaschinen 20A, 20B sowie Geräteschnittstellen 50 der Energiespeichermodule 40A, 40B miteinander verbindbar.

Die Werkzeugmaschinen 20A, 20B bilden erste Systemkomponenten 11, die Energiespeichermodule 40A, 40B zweite Systemkomponenten 12, die fest miteinander verbindbar sind, so dass sie jeweils ein System bilden.

Die Geräteschnittstellen 30, 50 umfassen zu diesem Zweck formschlüssig zueinander passende Konturen, beispielsweise zu einer Drehverriegelung geeignete Formschlusskonturen oder wie im vorliegenden Fall Steck-Formschlusskonturen 51 an der Geräteschnittstelle 50, die mit Steck-Gegen-Formschlusskonturen 31 den Geräteschnittstellen 30 formschlüssig in Eingriff bringbar sind, nämlich im Rahmen einer Steckbewegung.

Anhand dieser Steckbewegung gelangen Geräte-Versorgungskontakte 32 der Geräte-Schnittstelle 30 mit Versorgungskontakten 52 der Geräteschnittstelle 50 in Kontakt, so dass vom Energiespeicher 42 elektrische Energie über die Versorgungskontakte 52, 32 für die jeweilige Werkzeugmaschine 20A, 20B, insbesondere deren Antriebsmotor 22, bereitgestellt werden kann.

Die Geräteschnittstellen 30, 50 umfassen weiterhin Datenkontakte 33, 53 von Datenschnittstellen 34, 54, so dass auch eine Datenkommunikation, vorliegend insbesondere eine Bus-Kommunikation zwischen den Systemkomponenten 11, 12 möglich ist.

Für einen zusätzlichen Halt zu dem Formschlusskonzept anhand der Steck-Formschlusskonturen 51, 31 sorgt eine Fixiereinrichtung 55, mit denen die Systemkomponenten 11, 12 aneinander fixierbar sind. Die Fixiereinrichtung 55 umfasst beispielsweise ein Fixierelement 56, insbesondere eine Raste, ein Riegelelement oder dergleichen, welches mit einer Fixierkontur 35 in Eingriff bringbar ist. Die Fixierkontur 35 und das Fixierelement 56 sind an der ersten Systemkomponenten 11 und der zweiten Systemkomponente 12 angeordnet, wobei auch die umgekehrte Konfiguration ohne weiteres möglich ist. Die Fixiereinrichtung 55 bildet vorliegend eine Verriegelungseinrichtung und/oder Rasteinrichtung. Das Fixierelement 56 kann anhand eines Betätigungselements 57 außer Eingriff, optional auch in Eingriff, mit der Fixierkontur 35 gebracht werden. Beispielsweise handelt es sich bei dem Fixierelement 56 um einen Fixiervorsprung / Verriegelungsvorsprung, welche in Eingriff mit der als Fixieraufnahme oder Vertiefung ausgestalteten Fixierkontur 35 bringbar ist. Wenn die Fixiereinrichtung 55 ihre Fixierstellung oder Verriegelungsstellung einbringt, bleiben die Steck-Formschlusskonturen 51 in Eingriff mit den Steck-Gegen-Formschlusskonturen 31, d.h. eine Relativbewegung der Systemkomponenten 11, 12 entlang der Steckachse der Steck-Formschlusskonturen 51, 31 ist nicht möglich.

Das Betätigungselement 57 und/oder das Fixierelement 56 sind durch eine Federanordnung (nicht sichtbar) in die Fixierstellung bzw. Verriegelungsstellung federbelastet. Somit kann durch eine einfache Druckbetätigung oder Tastbetätigung des Betätigungselements 57 die Fixiereinrichtung 55 aus der Fixierstellung in die Lösestellung verstellt werden. Am Energiespeichermodul 40A sind bevorzugt aneinander entgegengesetzten Seiten jeweils ein Fixierelement 56 vorgesehen, zudem auch jeweils ein Betätigungselement 57, während beim Energiespeichermodul 40B lediglich eine einzige Drucktaste oder eine einziges Betätigungselement 57 notwendig ist.

Die Energiespeichermodule 40A, 40B können anhand eines Ladegeräts 220 aufgeladen werden. Das Ladegerät 220 weist ein Ladegerätgehäuse 221 auf, an welchem eine Geräteschnittstelle 230 vorgesehen ist. Die Geräteschnittstelle 230 weist Steck-Gegen-Formschlusskonturen 231 auf, die mit den Steck-Formschlusskonturen 51 der Energiespeichermodule 40A, 40B formschlüssig kompatibel sind. Eine Verriegelung ist für den stationären Betrieb nicht notwendig. Passend zu der Geräteschnittstelle 50 weist das Ladegerät 220 weiterhin Geräte-Versorgungskontakte 232 sowie Datenkontakte 233 einer Datenschnittstelle 234, vorzugsweise einer Bus-Schnittstelle auf. In dem Ladegerät 220 ist vorzugsweise ein Spannungswandler 235 angeordnet, der anhand einer Netzanschlusseinrichtung 236 mit elektrischem Strom versorgbar ist und an den Geräte-Versorgungskontakten 232 eine Gleichspannung zum Aufladen des Energiespeichers 42 bereitstellt. Der Anschlussstecker 237 bildet einen Bestandteil einer Netzanschlusseinrichtung 236 und kann unmittelbar am Ladegerätgehäuse 221 angeordnet oder über eine Leitung, die schematisch dargestellt ist, mit dem Ladegerätgehäuse 221 verbunden sein. Der Anschlussstecker 237 ist an das Versorgungsnetz EV anschließbar.

Die Datenschnittstellen 34, 54 sowie 234 sind vorliegend Busschnittstellen. Beispielsweise handelt es sich bei den Busschnittstellen oder Datenschnittstellen 34, 54, 234 um I²C-Busschnittstellen. Die Busschnittstellen umfassen eine Taktleitung CL, eine Datenleitung D sowie eine Versorgungsleitung VD, der Datenkontakte 33A, 53A und 234A zugeordnet sind, eine Taktleitung CL, der Datenkontakte 33B, 53B, 233B zugeordnet sind, sowie eine Datenleitung D, der Datenkontakte 33C, 53C, 234C zugeordnet sind. Die Versorgungsleitung VD dient dazu, dass die Geräteschnittstelle 30 oder 230 der Geräteschnittstelle 50 eine elektrische Versorgungsspannung, beispielsweise eine Busspannung UB, bereitstellt. Über die Taktleitung CL wird ein Bustakt des an den Datenschnittstellen 34, 54, 234 realisierten Busses BU bereitgestellt. Über die Datenleitung D werden Daten übertragen, vorzugsweise bidirektional vom Energiespeichermodul 40 zur Werkzeugmaschine 20 und umgekehrt und/oder vom Energiespeichermodul 40 zum Ladegerät 220 und umgekehrt.

Wenn die Systemkomponenten 11, 12 miteinander verbunden sind, stellt das Energiespeichermodul 40 eine Versorgungsspannung UV an den Versorgungskontakten 52A, 52B bereit, die zum Betreiben des Antriebsmotors 22 geeignet ist. Die Versorgungsspannung UV ist beispielsweise eine Gleichspannung von 15 Volt oder 18 Volt, kann aber auch jederzeit eine andere Spannung sein. An dieser Stelle sei erwähnt, dass ein Energieversorgungsmodul selbstverständlich auch eine Wechselspannung bereitstellen könnte. Darauf kommt es nicht an. Die Steuerungseinrichtung 26 der Werkzeugmaschine 20A, 20B, nachfolgend vereinfacht als Werkzeugmaschine 20 bezeichnet, steuert in Abhängigkeit von einer Betätigung des Schaltelements 24 den Antriebsmotor 22 an, wobei sie beispielsweise einen Schalter 24A öffnet oder schließt. Anstelle des Schalters 24A kann auch eine Leistungselektronik, beispielsweise eine Bestromungseinrichtung für einen elektronisch kommutierten Antriebsmotor 22, vorgesehen sein. Weiterhin ist es denkbar, dass das Schaltelement 24 unmittelbar in den Stromkreis des Antriebsmotors 22 geschaltet ist und somit diesen Einschalten und Ausschalten kann. Wenn der Schalter 24A geschlossen ist, fließt Strom vom Energiespeicher 42 über eine Leitung L1 zum Antriebsmotor 22 und von diesem wieder zurück über eine Leitung L2 zum Energiespeicher 42.

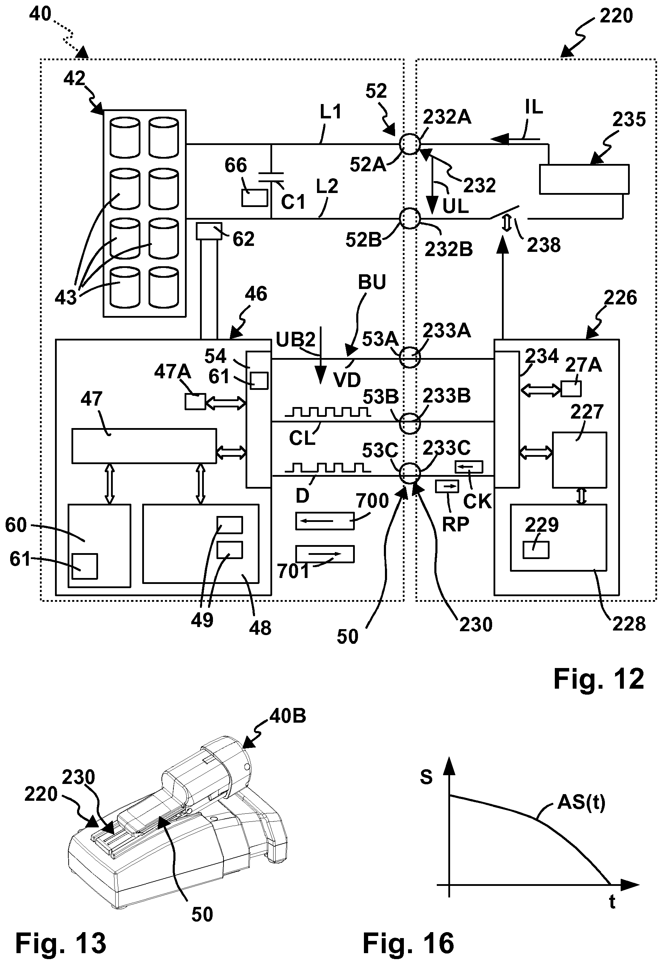

Bei einem Ladevorgang ist dieses Stromflusskonzept gerade umgekehrt, was anhand von Figur 12 deutlich wird. Ein Ladestrom IL fließt in diesem Fall von dem Spannungswandler 235 über die Leitung L1 zum Energiespeicher 42. Der Versorgungskontakt 232B ist ebenso wie der Versorgungskontakt 52 einer Leitung L2, beispielsweise einer Masseleitung zugeordnet. Der Ladevorgang wird vorzugsweise durch eine Steuerungseinrichtung 226 des Ladegeräts 220 gesteuert. Die Steuerungseinrichtung 226 kann beispielsweise den Schalter 238 ansteuern, um den Ladevorgang zu beginnen oder zu beenden. Zur Überwachung des Ladevorgangs kommuniziert auch das Ladegerät 220 mit dem Energiespeichermodul 40, nämlich über die Datenschnittstelle 234 und den diesen zugeordneten Datenkontakten 233A, 233B und 233C für die Versorgungsleitung VD, die Taktleitung CL und die Datenleitung D. Durch eine entsprechende Kommunikation auf dem Bus BU zwischen dem Ladegerät 220 und dem Energiespeichermodul 40 können beispielsweise der Ladezustand des Energiespeichers 42, dessen Nennspannung oder dergleichen abgefragt werden. Zur Steuerung und Überwachung des Ladevorgangs hat das Ladegerät 234 beispielsweise einen Prozessor 27, der Steuerbefehle oder Programmcode eines Programmmoduls 229 zur Steuerung des Ladevorgangs ausführen kann. Der Prozessor 227 ist mit einem Speicher 228 der Steuerungseinrichtung 226 des Ladegeräts 220 verbunden, in welchem das Programmmodul 229 gespeichert ist.

Der Staubsauger 70 ist drahtlos oder leitungslos ansteuerbar. Dazu weist der Staubsauger 70 eine integrale oder vorzugsweise als ein Modul ausgestaltete Extern-Kommunikationsvorrichtung 100 auf. Die Extern-Kommunikationsvorrichtung 100 ist lösbar in einer Modulaufnahme 90 des am Staubsaugergehäuse 71 anordenbar. Die Modulaufnahme 90 ist beispielsweise im Bereich der Bedienelementanordnung 77, insbesondere einer Frontwand 95, an der die Bedienelementanordnung 77 vorgesehen ist, angeordnet. Wenn das Kommunikationsmodul in Gestalt der Extern-Kommunikationsvorrichtung 100 in die Modulaufnahme 90 eingesteckt wird, gelangen Kontakte von Kontaktanordnungen 90, 101 der Modulaufnahme 90 und der Kommunikationsvorrichtung 100 in Kontakt miteinander. Somit können Daten, Informationen, elektrische Versorgungsspannung und dergleichen übertragen werden. Beispielsweise versorgt die Steuerungseinrichtung 86 über die Kontaktanordnung die Extern-Kommunikationsvorrichtung 100 mit der elektrischen Versorgungsspannung.

Weiterhin sind eine Datenschnittstelle 83 der Steuerungseinrichtung 86 und eine Daten-Schnittstelle 108 der Extern-Kommunikationsvorrichtung 100 anhand der Kontaktanordnungen 101 und 91 miteinander in Kontakt. Die Datenschnittstellen 83, 108 umfassen beispielsweise eine Busschnittstelle, über die die Extern-Kommunikationsvorrichtung 100 und die Steuerungseinrichtung 86 Daten und Informationen kommunizieren können.

Die Datenschnittstellen 108, 83 realisieren beispielsweise eine Busverbindung, insbesondere eine I²C-Busverbindung. Andere Buskommunikationen sind auch möglich. Weiterhin können die Datenschnittstellen 83, 108 auch einzelne Datenkontakte, beispielsweise für eine parallele Datenübertragung, umfassen.

Die Modulaufnahme 90 umfasst Seitenwände 92, die sich von einem Boden 93 der Modulaufnahme 90 zur Frontwand 50 erstrecken. In die Modulaufnahme 90, also in den Innenraum zwischen den Seitenwänden 92 und dem Boden 93, kann die von einer Rückseite 103 einer Frontwand 105 der Extern-Kommunikationsvorrichtung 100 abstehende Kontaktanordnung 101 in die am Boden 93 der Modulaufnahme 90 angeordnete Kontaktanordnung 91 eingreifen oder in Kontakt mit derselben gelangen. Dann sind Seitenwandflächen 101 der Frontwand 105 fluchtend mit den Seitenwänden 92, so dass eine Vorderseite oder die Frontwand 105 der Extern-Kommunikationsvorrichtung 100, wie in Figur 1 dargestellt, mit der Frontwand 95 fluchtet. Allein schon die Steckverbindung des Moduls der Extern-Kommunikationsvorrichtung 100 in der Modulaufnahme 90 sorgt für einen zuverlässigen Halt. Zu einer weiteren Fixierung ist vorzugsweise eine Fixiereinrichtung, beispielsweise eine in der Zeichnung nicht dargestellte Rasteinrichtung, Klemmeinrichtung oder dergleichen vorgesehen. Vorliegend ist eine Verschraubung vorgesehen. Beispielsweise sind an der Modulaufnahme 90 eine oder zwei Schraubaufnahmen 94 vorgesehen, die mit Schraubaufnahmen 104 der Extern-Kommunikationsvorrichtung 100 fluchten, wenn diese in der Modulaufnahme 90 aufgenommen ist. In die Schraubaufnahmen 104, 94 können in Figur 1 angedeutete Schrauben eingeschraubt werden.

Der Staubsauger 70 kann anhand der Extern-Kommunikationsvorrichtung 100 drahtlos und/oder leitungslos angesteuert werden, beispielsweise durch eine Drahtlos-Kommunikationsschnittstelle 60 des Energiespeichermoduls 40A oder 40B.

An dieser Stelle sei erwähnt, dass die Drahtlos-Kommunikationsschnittstelle 60 exemplarisch für eine drahtlose Ansteuerung der Systeme umfassend die Systemkomponenten 11 und 12, nämlich jeweils ein Energiespeichermodul und eine Werkzeugmaschine, zu verstehen ist. So kann beispielsweise die Werkzeugmaschine 20C mit einer Drahtlos-Kommunikationsschnittstelle 60C ausgestattet sein, um eine oder mehrere der nachfolgend noch beschriebenen Kommunikationsfunktionen direkt zu leisten, d.h. ohne ein jeweiliges Energiespeichermodul 40, welches eine Drahtlos-Kommunikationsschnittstelle, drahtlos mit dem Staubsauger 70 kommunizieren.

Die Extern-Kommunikationsvorrichtung 100 kann anhand eines Anmelde-Bedienelements 160 aus einem Arbeitsmodus, in welchem keine Steuerverbindung mit der Extern-Kommunikationsvorrichtung 100 neu herstellbar oder wiederherstellbar ist, in einen Bereitschaftsmodus geschaltet werden.

Der Bereitschaftsmodus oder der Arbeitsmodus werden von der Extern-Kommunikationsvorrichtung 100 optisch und/oder akustisch signalisiert. Beispielsweise ist eine Anzeigeeinrichtung 114 vorgesehen, die verschiedene Betriebsmodi der Extern-Kommunikationsvorrichtung 100 signalisieren kann. Die Anzeigeeinrichtung 114 umfasst beispielsweise eine Leuchtanzeige, insbesondere eine ringförmige Leuchtanzeige. Die Anzeigeeinrichtung 114 ist beispielsweise um oder an dem Anmelde-Bedienelement 106 angeordnet. Das Anmelde-Bedienelement 106 ist beispielsweise ein Taster 107, um den sich vorzugsweise die Anzeigeeinrichtung 114 ringförmig erstreckt.

Wenn die Anzeigeeinrichtung 114 dauerhaft leuchtet, signalisiert sie eine etablierte Steuerverbindung, also den Status "verbunden". Wenn die Extern-Kommunikationsvorrichtung 100 anhand des Anmelde-Bedienelements 106 aus dem Arbeitsmodus in den Bereitschaftsmodus geschaltet wird, leuchtet die Anzeigeeinrichtung 114 beispielsweise in einer anderen Farbe oder mit einem anderen Bewegungsmuster, insbesondere mit einem langsam kreisenden Bewegungsmuster. Dieses Bewegungsmuster oder die Farbe der Anzeigeeinrichtung 114 kann abhängig von der Art der Steuerverbindung sein. Wenn eine Steuerverbindung wie nachfolgend noch erläutert eine aktuell herzustellende und/oder bereits hergestellte temporäre Steuerverbindung ist, kann beispielsweise die Anzeigeeinrichtung 114 eine langsam kreisende Leucht-Darstellung haben. Wenn jedoch eine Steuerverbindung dauerhaft etabliert oder herzustellen ist, d. h. der Bereitschaftsmodus zur Herstellung einer dauerhaften Steuerverbindung geeignet ist, leuchtet die Anzeigeeinrichtung 114 anders. Beispielsweise erfolgt das kreisförmige Leuchten der Anzeigeeinrichtung 114 dann mit höherer Frequenz.

Für eine dauerhafte Steuerverbindung ist ein z.B. Kommunikationsmodul 300 vorgesehen, das vorzugsweise einen Systembestandteil des Staubsaugers 70 bildet, mit der Extern-Kommunikationsvorrichtung 100 verbunden ist.

Das Kommunikationsmodul 300 ist ein außerhalb des Saugergehäuses 71 angeordnetes oder anordenbares Kommunikationsmodul. Das Kommunikationsmodul 100 dient zur Aufrechterhaltung und/oder Herstellung einer Steuerverbindung des elektrischen Geräts in Gestalt einer der Systemkomponenten 11 und/oder 12 mit dem Staubsauger 70, insbesondere der Extern-Kommunikationsvorrichtung 100.

Das Kommunikationsmodul 300 weist ein Modulgehäuse 301 auf, welches am Saugschlauch 15 platzierbar ist. Das Modulgehäuse 301 hat an seiner Oberseite 302 zweckmäßigerweise ein Schaltelement 334, mit dem das Saugaggregat 75 einschaltbar und/oder ausschaltbar ist. Das Schaltelement 334 nimmt ergonomisch günstig einen Großteil der Oberseite 302 ein, so dass es leicht bedienbar bzw. betätigbar ist. Das Schaltelement 334 ist beispielsweise ein Drucktaster, Wipptaster oder dergleichen.

Das Modulgehäuse 301 hat eine an den Saugschlauch 15 angepasste Gestalt. Beispielsweise hat eine Unterseitenwand 306, die im am Saugschlauch 15 montierten Zustand des Kommunikationsmoduls 300 an dessen Außenumfang zu liegen kommt, eine gerundete, an den runden Außenumfang des Saugschlauchs 15 angepasste Kontur. Zwischen der Unterseitenwand 306 und der Oberseite oder Oberseitenwand 302 erstrecken sich eine Vorderseitenwand 303, eine Rückseitenwand 304 sowie Längsseitenwände 305. Diese begrenzen einen Innenraum, in welchem eine Steuerungseinrichtung 336 des Kommunikationsmodul 300 geschützt angeordnet ist.

Die Steuerungseinrichtung 336 weist beispielsweise einen Prozessor 337, einen Speicher 338 sowie mindestens ein Programmmodul 339 auf, welches Programmcode umfasst, der vom Prozessor 337 zur Ausführung der Funktionen des Kommunikationsmoduls 300, die später noch erläutert werden, ausführen kann.

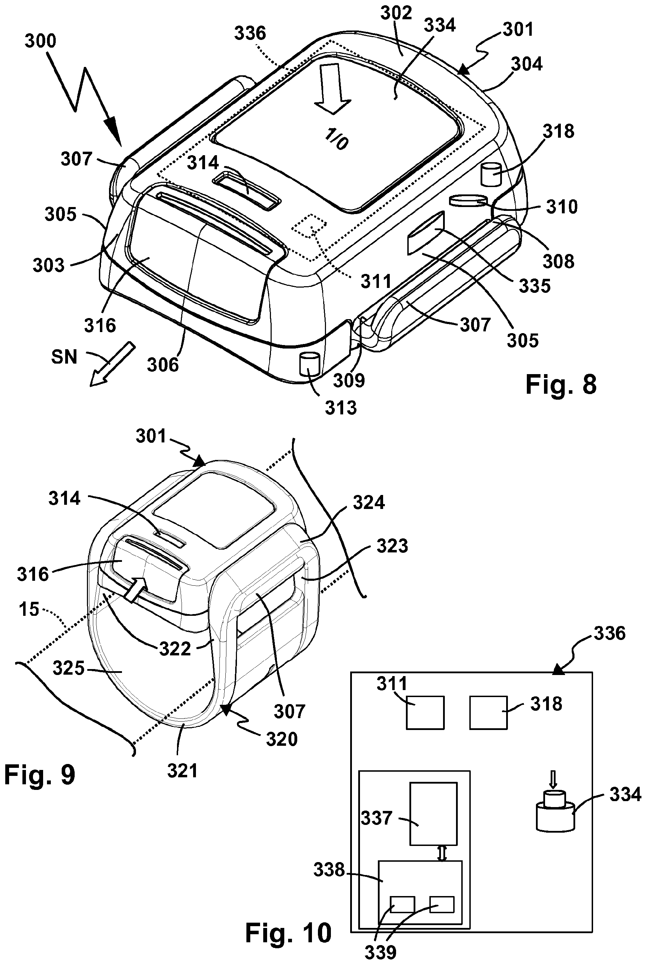

Zur Montage des Kommunikationsmoduls 300 am Saugschlauch 15 sind Haken 301 an den Längsseitenwänden 305 vorgesehen. Mithin hat also das Modulgehäuse 301 an einander entgegengesetzten Seiten jeweils einen Haken 307. Jeder Haken 307 weist einen Hakenvorsprung 308 und eine Hakenvertiefung 309 auf. Die Haken 307 dienen zur Befestigung einer Schlauchhalterung 320 (Figur 8), beispielsweise einer Klemmschelle 321. Die Schlauchhalterung 320 weist an ihren Längsendbereichen 322 jeweils Hakenaufnahmen 323 auf, die in Eingriff mit den Haken 307 gebracht werden können. Selbstverständlich sind auch andere Befestigungstechnologien möglich, beispielsweise mittels eines Klettbands oder dergleichen. Denkbar kann auch eine Integration eines Kommunikationsmoduls 300 an den Längsenden 16 und/oder 17 des Saugschlauchs 15 sein, beispielsweise wenn dort entsprechende Rohrkörper, vorgesehen sind, z.B. Anschlussstücke oder Anschlussstutzen aus Gummi, Kunststoff oder dergleichen. Das Kommunikationsmodul 300 kann aber auch an den Saugschlauch 15 angeklebt, angeschweißt oder dergleichen anderweitig mit dem Saugschlauch 15 verbunden sein. Für die Kommunikationsfunktionen des Kommunikationsmoduls 300 spielt dies jedoch keine wesentliche Rolle. Allerdings ist die ergonomisch günstige Anordnung am Saugschlauch 15 vorteilhaft.

Zum Schalten der Extern-Kommunikationsvorrichtung 100 aus dem Arbeitsmodus in der Bereitschaftsmodus ist ein Anmelde-Bedienelement 316 vorgesehen. Das Anmelde-Bedienelement 316 umfasst beispielsweise einen Taster 317. Die Funktionen des Anmelde-Bedienelements 316 entsprechend denjenigen des Anmelde-Bedienelements 106, so dass der Bediener sozusagen ein gleiches Bedienkonzept vorfindet.

Dementsprechend ist auch eine Anzeigeeinrichtung 314 gleich oder ähnliche ausgestaltet wie die Anzeigeeinrichtung 114. Die Anzeigeeinrichtung 314 umfasst beispielsweise eine Leuchtanzeige, die Informationen in Zusammenhang mit der Herstellung und/oder dem Vorhandensein einer Steuerverbindung zwischen dem Kommunikationsmodul 300 und der Extern-Kommunikationsvorrichtung 100 signalisiert.

Wenn ein Bediener beispielsweise das Anmelde-Bedienelement 316 betätigt, insbesondere den Taster 317 drückt, sendet eine Kommunikationsschnittstelle 311, insbesondere eine Bluetooth-Schnittstelle, eine WLAN-Schnittstelle oder dergleichen, an die Kommunikationsschnittstelle 110 ein entsprechendes Steuersignal, insbesondere eine Schaltnachricht SN zum Schalten in den Bereitschaftsmodus. Dadurch wird die Extern-Kommunikationsvorrichtung 110 in einen Bereitschaftsmodus geschaltet, was die Anzeigeeinrichtung 314 signalisiert. Eine Betätigung des Anmelde-Bedienelements 316 führt also dazu, dass die Extern-Kommunikationsvorrichtung 100 vom Arbeitsmodus in den Bereitschaftsmodus schaltet. Zum Senden des Steuersignals ist vorzugsweise eine verschlüsselte und/oder authentifizierte Verbindung zwischen dem Kommunikationsmodul 300 und der Extern-Kommunikationsschnittstelle 110 vorgesehen.

Bei Betätigung des Schaltelements 334 sendet das Kommunikationsmodul 300 einen Startbefehl oder Einschaltbefehl für das Saugaggregat 75 an die Extern-Kommunikationsvorrichtung 100 und mithin an die Steuerungseinrichtung 86 des Staubsaugers 70. Anhand eines Schaltelements 335, beispielsweise eines Drehelements, eines Schiebeelements oder dergleichen, kann das Kommunikationsmodul 300 zum Senden eines Steuerbefehls an die Extern-Kommunikationsvorrichtung 100 und somit an den Staubsauger 70 senden, mit dem beispielsweise die Drehzahl des Saugaggregats 75 und/oder dessen Leistung einstellbar ist. Mithin ist kann das Kommunikationsmodul 300 als eine Fernsteuerung für das Saugaggregat 75 dienen. Auch für die Fernsteuerungsfunktionen ist eine gesicherte und/oder verschlüsselte Steuerverbindung zwischen dem Kommunikationsmodul 300 und der Extern-Kommunikationsvorrichtung 100 vorteilhaft.

Da das Kommunikationsmodul 300 eine Systemkomponente des Staubsaugers 70 bildet, ist eine Steuerverbindung vom Kommunikationsmodul 300 zur Extern-Kommunikationsvorrichtung 100 eine sozusagen dauerhafte Steuerverbindung. Eine derartige Steuerverbindung erfordert einen höheren Schwierigkeitsgrad zu ihrer Herstellung als eine Steuerverbindung zwischen einer Systemkomponente 11 oder 12 und dem Staubsauger 70. Dementsprechend ist beispielsweise das Anmelde-Bedienelement 106 und/oder 316 länger zu betätigen, um das Kommunikationsmodul 300 beim Staubsauger 70 bzw. der Extern-Kommunikationsvorrichtung 100 zu autorisieren oder anzumelden. Eine Anmeldeprozedur zur Herstellung einer Steuerverbindung zwischen einer der Systemkomponenten 11 oder 12, beispielsweise dem Energiespeichermodul 40 und der Extern-Kommunikationsvorrichtung 100 dagegen ist leichter herzustellen, beispielsweise anhand einer kürzeren Betätigung des Anmelde-Bedienelements 106 und/oder 316.

Die Werkzeugmaschinen 20A, 20B kommunizieren anhand der Energiespeichermodule 40A, 40B mit dem Staubsauger 70 und können diesen über Steuerverbindungen S1 und S2 ansteuern. Allerdings können Steuerbefehle über die Steuerverbindungen S1, S2 nicht unmittelbar, sondern erst nach einer vorherigen Anmeldung / Autorisierung der Werkzeugmaschinen 20A, 20B bei der Extern-Kommunikationsvorrichtung 100 gesendet werden. Mithin muss also die jeweilige Steuerverbindung S1, S2 zunächst hergestellt werden, bevor sie zur Übertragung von Steuerbefehlen und/oder Meldesignalen zwischen den voneinander entfernten Komponenten 20A, 70 bzw. 20B, 70 zur Verfügung steht.

Die Konfiguration ist dabei so getroffen, dass die Werkzeugmaschinen 20A, 20B nicht direkt drahtlos mit dem Staubsauger 70 kommunizieren, sondern anhand der ihnen zugeordneten und an sie angebauten Energiespeichermodule 40A, 40B. Allerdings ist durchaus möglich, dass die nachfolgend im Zusammenhang mit der Drahtlos-Kommunikationsschnittstelle 60 beschriebene Kommunikation auch mit einer bei der Werkzeugmaschine 20B realisierbar ist, nämlich beispielsweise direkt (nicht dargestellt), ähnlich wie die Steuerverbindung S2, oder indirekt über die Kommunikationsmodule 300B und 300C, wie noch deutlicher wird.

Grundsätzlich bilden die Energiespeichermodule 40A, 40B sozusagen Gateways für die Werkzeugmaschinen 20A, 20B für drahtlose Kommunikation, insbesondere in Steuerrichtung, d.h. von der Werkzeugmaschine 20A, 20B zum Staubsauger 70. Aber auch die umgekehrte Kommunikationsrichtung vom Staubsauger 70 zu den Werkzeugmaschinen 20A, 20B ist über die "Gateways" 40A, 40B möglich.

Damit diese Funktionen besonders einfach realisierbar sind, haben die Energiespeichermodule 20A, 20B eine Intelligenz derart, dass sie beispielsweise erkennen können, ob sie an ein die drahtlose Kommunikation mit dem Staubsauger 70 benötigendes oder diese überhaupt realisierendes Gerät angeschlossen sind oder an ein anderes Gerät, beispielsweise eine Werkzeugmaschine, die für den Staubsaugerbetrieb nicht geeignet ist, zum Beispiel ein Schraubgerät, eine Klebemaschine oder dergleichen. Insbesondere können die Energiespeichermodule 40A, 40B detektieren, ob sie mit dem Ladegerät 220 verbunden sind.

Das Ladegerät 220 sendet nämlich beispielsweise über die Busschnittstelle BU eine Abfragenachricht 700 an die Steuerungseinrichtung 46, mit der sie den aktuellen Ladezustand des Energiespeichers 42, den Zustand und/oder die maximale Ladespannung für die Speicherzellen 43, maximale Ladeströme oder dergleichen abfragt. Die Steuerungseinrichtung 46 antwortet mit einer Antwortnachricht 701, in der die entsprechenden Informationen gespeichert sind. Anhand der Qualität der Abfragenachricht 700, nämlich beispielsweise der Tatsache, dass eine Höhe eines maximal zulässigen Ladestroms abgefragt wird, kann das Energiespeichermodul 40 erkennen, dass es an eine Ladegerät angeschlossen ist und nicht an einen elektrischen Verbraucher in der Art der Werkzeugmaschine 20A oder 20B, der eine drahtlose Kommunikationsverbindung mit einem Staubsauger benötigt.

Aber auch andere Informationen können vom Energiespeichermodul 40 dazu ausgewertet werden, um den Anschluss an ein Ladegerät in der Art des Ladegerätes 220 zu erkennen. So ist beispielsweise eine Ladespannung UL, die vom Ladegerät 220 bereitgestellt wird, höher als eine Versorgungsspannung UV, die beim Anschluss eines elektrischen Verbrauches zwischen den Leitungen L1 und L2 oder den Versorgungskontakten 52A, 52B anliegt.

Die Steuerungseinrichtung 46 wird über die Busschnittstelle oder Datenschnittstelle 54 mit elektrischer Energie versorgt. Die an der Versorgungsleitung VD oder dem Datenkontakt 53A anliegende Versorgungsspannung UB2, welche vom Ladegerät 220 bereitgestellt wird, unterscheidet sich in ihrer Spannungshöhe von der Versorgungsspannung UB1, die die elektrische Handwerkzeugmaschine 220 am Datenkontakt 53A bereitstellt. Die Versorgungsspannung UB1 beträgt beispielsweise 3 Volt, die Versorgungsspannung UB2 5 Volt.

An der Datenschnittstelle 54 ist zur Erfassung der unterschiedlichen Spannungshöhen der Spannungen UB1 und UB2 beispielsweise eine Spannungsmesseinrichtung 61, insbesondere eine Spannungssensor, eine Widerstandsbeschaltung oder dergleichen vorgesehen, so dass die Steuerungseinrichtung 46 erkennen kann, ob sie an ein Ladegerät (Ladegerät 220) oder an einen elektrischen Verbraucher bzw. ein elektrische Werkzeugmaschine in der Art der Werkzeugmaschinen 20A, 20B angeschlossen ist.

Es ist möglich, dass die Steuerungseinrichtung 46 in Abhängigkeit davon, ob das Energiespeichermodul 40 an eine Werkzeugmaschine 20 oder an das Ladegerät 220 angeschlossen ist, einen Betriebsmodus der Drahtlos-Kommunikationsschnittstelle 60 ändert. Beispielsweise aktiviert die Steuerungseinrichtung 46 die Drahtlos-Kommunikationsschnittstelle 60, wenn das Energiespeichermodul 40 an eine Werkzeugmaschine 20 angeschlossen ist, während sie die Drahtlos-Kommunikationsschnittstelle 60 deaktiviert, wenn das Energiespeichermodul 40 an das Ladegerät 220 angeschlossen ist.

Es ist auch möglich, dass die Steuerungseinrichtung 46 die Drahtlos-Kommunikationsschnittstelle 60, wenn das Energiespeichermodul 40 an das Ladegerät 220 angeschlossen ist, nicht deaktiviert sondern den Kommunikationsmodus ändert. So kann die Drahtlos-Kommunikationsschnittstelle 60 beispielsweise zu einer Kommunikation mit der noch zu erläuternden Konfigurationseinrichtung 500, insbesondere einem Smartphone, aktiv bleiben, wenn das Energiespeichermodul 40 nicht an die Werkzeugmaschine 20 angeschlossen ist, beispielsweise mit dem Ladegerät 220 verbunden ist oder keine derartige Verbindung hat. Anhand der Konfigurationseinrichtung 500, beispielsweise des Smartphones, können beispielsweise Programmdaten oder dergleichen zu dem Energiespeichermodul 40 übertragen werden, auch wenn dieses nicht mit der Werkzeugmaschine 20 verbunden ist.

Wenn jedoch das Energiespeichermodul 40A oder 40B mit der Werkzeugmaschine 20A oder 20B verbunden ist, ist die drahtlose Kommunikation mit dem Staubsauger 70, insbesondere dessen Extern-Kommunikationsvorrichtung 100, problemlos und einfach möglich.

Ein Funktions- und Kommunikationsablauf 400 beginnt beispielsweise mit einer Bedienhandlung 401 eines Bedieners N. Der Bediener N des Systems 10 schließt beispielsweise den Staubsauger 70 an das Versorgungsnetz EV an oder betätigt den Schalter oder das Schaltelement 78 derart, dass der Staubsauger grundsätzlich betriebsbereit ist, also eine Funktion 410 "Zustand im Betrieb" hat.

Eine Steuerungseinrichtung 117 der Extern-Kommunikationsvorrichtung 100 schaltet daraufhin in einen Zustand 411, in welchem die Extern-Kommunikationsvorrichtung nach bereits zur Ansteuerung des Staubsaugers 70 autorisierten Geräten. Dieser Zustand 411 dauert beispielsweise eine vorbestimmte Zeit, insbesondere eine Minute oder zwei Minuten, worauf er wieder endet. Diese zeitliche Beschränkung ist eine Option, die das Risiko eines nicht autorisierten Zugriffs auf den Staubsauger 70 absenkt.

Zur Ausführung dieser Funktionalität und der nachfolgenden Funktionalitäten weist die Steuerungseinrichtung 116 beispielsweise einen Prozessor 117 zur Ausführung vom Programmcode eines Programmmoduls 119 auf, der in einem Speicher 118 der Extern-Kommunikationsvorrichtung 100 gespeichert ist.

Eine Funktion 412 des Programmmoduls 119 ermöglicht beispielsweise das Erfassen von Informationen des Anmelde-Bedienelementes 106. Wenn also der Bediener beispielsweise in einem Schritt 413 das Anmeldebedienelement 106 betätigt, insbesondere drückt, meldet dies die Funktion 412 anhand eines Ausgabebefehls 414 an den Bediener N zurück, indem sie nämlich die Anzeigeeinrichtung 114 dazu ansteuert, dass der Bediener sieht, dass die Extern-Kommunikationsvorrichtung 100 und somit der Staubsauger 70 zur Herstellung neuer Steuerverbindungen bereit ist. Die Extern-Kommunikationsvorrichtung 100 geht in einen Zustand 415, nämlich in einen Betriebsbereitschaftsmodus, in welchem eine Steuerverbindung mit der Extern-Konfigurationsvorrichtung 100 herstellbar ist.

Das Kommunikationsmodul 40 ist am Anfang des Funktions- und Kommunikationsablaufs 400 in einem Zustand 430 "Schlafen", also inaktiv. Ausgehend davon sind mehrere Szenarien zur Herstellung einer der Steuerverbindungen S1 oder S2 möglich, von denen nachfolgend eine erste beschrieben ist:
Der Bediener N betätigt beispielsweise das Schaltelement 24 der Werkzeugmaschine 20A, um diese einzuschalten. Noch ist die Werkzeugmaschine 20A bzw. das zugeordnete Energiespeichermodul 40A jedoch nicht zur Ausgabe von Schaltbefehlen oder Steuerbefehlen zum Einschalten des Saugaggregats 75 autorisiert. Eine derartige Anmeldung oder Autorisierung geschieht jedoch sozusagen automatisch, wenn der Bediener N lediglich das Schaltelement 24 betätigt.

Wenn der Bediener N das Schaltelement 24 betätigt, wird die Kommunikationsbeziehung zwischen der Werkzeugmaschine 20A und dem Energiespeichermodul 40A aktiv geschaltet und/oder hergestellt. Das Energiespeichermodul 40, also jedes der Energiespeichermodule 40A, 40B, erkennt an durch die Betätigung des Schaltelementes 24 ausgelösten Betriebsinformationen, dass ein zur Herstellung und Nutzung einer Steuerverbindung geeignetes Gerät an die Geräteschnittstelle 50 angeschlossen ist.

Das Energiespeichermodul 40 kann also beispielsweise anhand der Versorgungsspannung UV erkennen, dass ein elektrischer Verbraucher angeschlossen ist. Die Spannung UV unterscheidet sich von der Spannung UL des Ladegerätes 220.

Eine weitere Betriebsinformation kann beispielsweise auch die Versorgungsspannung UB1 sein, die von der Steuerungseinrichtung 26 an der Versorgungsleitung VD oder dem Datenkontakt 53a bereitgestellt wird. Die Versorgungsspannung UB1 unterscheidet sich von der Versorgungsspannung UB2 des Ladegerätes 220, ist insbesondere niedriger als diese. Somit bildet also auch die Versorgungsspannung UB1 einen Indikator für eine Betätigung des Schaltelementes 24.

Weiterhin kann eine Initialisierungskommunikation auf dem Bus BU von der Steuerungseinrichtung 46 als Indikator für die Aktivierung der Datenschnittstelle 54 durch ein den Staubsauger 70 ansteuerndes Gerät, also die Werkzeugmaschine 20A oder 20B (nachfolgend nur als Werkzeugmaschine 20 bezeichnet), ausgewertet werden. So kann beispielsweise eine Anfragenachricht 750 von der Steuerungseinrichtung 26 an die Steuerungseinrichtung 46 gesendet werden, mit der beispielsweise eine bereitstellbare Versorgungsspannung UV des Energiespeichermoduls 40 abgefragt wird. In der Anfragenachricht 750 können aber auch das elektrische Gerät bzw. die Werkzeugmaschine 20 identifizierende Daten enthalten sein, zum Beispiel eine Kennung 751, die die Werkzeugmaschine 20A, 20B als eine eine Staubabsaugung benötigende Werkzeugmaschine charakterisiert. Die Anfragenachricht 750 stellt beispielsweise eine Betriebsbereitschaftsinformation der Werkzeugmaschine 20 dar. Mit einer Antwortnachricht 752 beantwortet die Steuerungseinrichtung 46 die Anfragenachricht 750 und stellt die angefragten und/oder Informationen, beispielsweise Ladezustand des Energiespeichermoduls etc., zur Verfügung.

Ausgelöst also durch die Betätigung des Schaltelementes 24 sendet das Energiespeichermodul 40 über die Drahtlos-Kommunikationsschnittstelle 60 in einer Funktion 431, beispielsweise des Programmmoduls 419, im Rahmen eines Sendevorgangs 432 eine Anmeldenachricht 440 an die Extern-Kommunikationsvorrichtung 100.

Die Anmeldenachricht 440 umfasst beispielsweise eine Broadcast-Senderkennung 44x, d.h. eine Anmeldenachricht, die an mehrere grundsätzlich empfangsbereite Staubsauger, nicht nur den Staubsauger 70, gerichtet ist. Weiterhin ist in der Anmeldenachricht 440 optional ein Autorisierungsparameter 442 angegeben. Der Autorisierungsparameter 442 umfasst beispielsweise eine grundsätzliche Systemkompatibilität des Energiespeichermoduls 40 oder der Werkzeugmaschine 20 mit dem Staubsauger 70. Der Autorisierungsparameter 442 kann beispielsweise eine Herstellerkennung oder dergleichen umfassen.

Die Extern-Kommunikationsvorrichtung 100 empfängt mit einer Funktion 416 die Anmeldenachricht 440. Die Funktion 416 ist für eine vorbestimmte Zeitspanne aktiv, beispielsweise 500 msec bis 1000 msec, weil in dieser Zeit die Anmeldeprozedur mit dem anmeldenden Energiespeichermodul 40 abgeschlossen sein muss. Mit einer Anmeldebestätigungsnachricht 445 bestätigt, die Extern-Kommunikationsvorrichtung 100 die Anmeldung des Energiespeichermoduls 40. Die Anmeldebestätigungsnachricht 445 wird in einem Schritt oder Sendevorgang 417 versendet. Die Anmeldebestätigungsnachricht 445 umfasst beispielsweise die Adresskennung 446 des Energiespeichermoduls 40 als Absenderadresse. Optional können weitere Informationen 447 in der Anmeldebestätigungsnachricht 445 enthalten sein, beispielsweise ein Zugangsschlüssel, ein Passwort oder dergleichen. Die Informationen 447 können aber auch beispielsweise eine benötigte oder einzustellende Saugleistung des Saugaggregats 75 kennzeichnen oder dergleichen andere für den späteren Betrieb günstige Informationen.

Die Anmeldung des Energiespeichermoduls 40 bei der Extern-Kommunikationsvorrichtung 100 ist jedoch nur eine temporäre Anmeldung, die für einen aktuellen Betrieb notwendig ist. Dementsprechend ist vorteilhaft in der Anmeldenachricht 440 eine Temporärkennung 443 enthalten, so dass die Extern-Kommunikationsvorrichtung 100 sozusagen weiß, dass nur eine temporäre Anmeldung bzw. temporäre Steuerverbindung gewünscht ist.

An dieser Stelle wird auch ein Unterschied zur sozusagen dauerhaften Anmeldung beispielsweise des Kommunikationsmoduls 300 deutlich. Zur Anmeldung des Kommunikationsmoduls 300 ist nämlich eine umständlichere oder schwierigere Bedienhandlung des Bedieners N notwendig, nämlich beispielsweise ein längere Betätigung des Anmelde-Bedienelementes 106 als bei einer temporären Anmeldung. Bei einem Bereitschaftsmodus für eine dauerhafte Steuerverbindung oder Kommunikationsbeziehung gibt die Extern-Kommunikationsvorrichtung 100 beim Ausgabebefehl 414 ein gegenüber der Anmeldung für eine temporäre Steuerverbindung verschiedenes Signal zur Ausgabe an der Anzeigeeinrichtung 114, beispielsweise zu einem schnelleren Blinken der LEDs bzw. einem Blinken der LEDs mit kürzerer Frequenz. Schließlich gibt das Kommunikationsmodul 300 in einer mit der Anmeldenachricht 440 vergleichbaren Anmeldenachricht nicht die Temporär-Kennung 443 an, sondern eine Dauer-Kennung.

Wenn die Drahtlos-Kommunikationsschnittstelle 60 bzw. der Energiespeicher 40 erfolgreich bei dem Staubsauger 70 oder der Extern-Kommunikationsvorrichtung 100 angemeldet ist, gehen beide Komponenten in einen Zustand 418 "Verbunden". Auch das dauerhaft angemeldete Kommunikationsmodul 300 würde diesen Zustand einnehmen. Nachzutragen ist noch, dass die Funktion 431 vorteilhaft eine Zeitbegrenzung umfasst. Wenn nicht innerhalb einer vorbestimmten oder einstellbaren Zeit, beispielsweise 500 bis 1000 msec, nach Einschalten des Schaltelementes 24 und/oder nach Versenden der Anmeldenachricht 440 keine Anmeldebestätigungsnachricht 445 eintrifft, ist der Anmeldeversuch sozusagen gescheitert.

Ausgehend vom Zustand 418 "Verbunden" ist vorteilhaft eine Authentifizierungsprozedur und/oder eine Verschlüsselungsprozedur vorgesehen. Die nachfolgend etablierte Steuerverbindung S1 oder S2 soll nämlich vorteilhaft authentifiziert und/oder verschlüsselt vonstattengehen.

Beispielsweise sendet die Extern-Kommunikationsvorrichtung 100 mit einem Verschlüsselungsparameter 451. Wenn nämlich bereits eine frühere Verschlüsselung bzw. frühere Kommunikation zwischen der Extern-Kommunikationsvorrichtung 100 und einem der Energiespeichermodule 40A, 40B existiert hat, greift die Extern-Kommunikationsvorrichtung 100 auf bereits bestehende Parameter zurück. Beispielsweise sind in dem Speicher 118 der Extern-Kommunikationsvorrichtung die Adresskennung 446 sowie diesen zugeordnet der Verschlüsselungsparameter 451 von einer bereits früher existierenden Steuerverbindung zu dem Energiespeichermodul 40A, 40B gespeichert.

Exemplarisch ist erwähnt, dass auch andere Adresskennungen und zugeordnete Verschlüsselungsparameter in dem Speicher 118 gespeichert sein können, beispielsweise eine Adresskennung 446C der Drahtlos-Kommunikationsschnittstelle 60C sowie ein Verschlüsselungsparameter 451C für eine Steuerverbindung zwischen der Drahtlos-Kommunikationsschnittstelle 60C der Werkzeugmaschine 20B und der Extern-Kommunikationsvorrichtung 100.

An dieser Stelle sei noch erwähnt, dass die Extern-Kommunikationsvorrichtung 100 dann, wenn keine Verschlüsselungsparameter für das jeweilige Energiespeichermodul 40 bekannt sind, anhand einer Nachricht 455 den Verschlüsselungsparameter 451 oder einen neuen, anderen Verschlüsselungsparameter 456 versendet, so dass eine verschlüsselte Kommunikation zwischen den Komponenten 100, 40 möglich ist und somit der Zustand 421 "verschlüsselte Verbindung" erreicht wird.

Optional steuert die Extern-Kommunikationsvorrichtung 100, insbesondere deren Steuerungseinrichtung 116, die Anzeigeeinrichtung 114 an (Schritt 423A), so dass diese die vorhandene, verschlüsselte Verbindung signalisiert. Beispielsweise leuchtet dann die Anzeigeeinrichtung 114 dauerhaft.

Es ist auch möglich, dass bei einem Energiespeichermodul mehrere Adresskennungen und/oder Verschlüsselungsparameter gespeichert sind. So kann beispielsweise bei dem Energiespeichermodul 40 bzw. der Steuerungsvorrichtung 46 vorgesehen sein, dass sie Adressdaten und Verschlüsselungsdaten eines weiteren, in der Zeichnung nicht dargestellten Staubsaugers gespeichert hat, nämlich beispielsweise eine Adresskennung 441B und einen Verschlüsselungsparameter 451B dieses weiteren Staubsaugers. Somit kann auch das Energiespeichermodul 40 bei Bedarf sozusagen auf einen anderen Staubsauger unmittelbar zugreifen.

Zurückkommend auf den Funktions-Kommunikationsablauf 400 verläuft die weitere Kommunikation dann beispielsweise wie folgt:
In einer Funktion 433 "Einschalten" sendet das Energiespeichermodul 40 in einem Sendevorgang 434 beispielsweise die Steuerungseinrichtung 46 beispielsweise einen Steuerbefehl 460, welcher eine Einschaltkennung 461 enthält. Zudem aktiviert die Steuerungseinrichtung 46 in einem Aktivierungsschritt 435 die Anzeigeeinrichtung 44 zur Anzeige der etablierten Steuerverbindung S1 oder S2. Beispielsweise leuchten die Leuchten 445 dann blau oder in einem anderen Muster als zur Anzeige eines Ladezustandes.

Nach Erhalt des Steuerbefehls 460 steuert die Extern-Kommunikationsvorrichtung 100 beispielsweise die Steuerungseinrichtung 86 an, so dass diese in einem Schritt 422 das Saugaggregat 75 einschaltet. Zudem steuert die Extern-Kommunikationsvorrichtung 100, insbesondere deren Steuerungseinrichtung 116, die Anzeigeeinrichtung 114 an (Schritt 423), so dass diese das Einschalten des Saugaggregats 75 signalisiert. Beispielsweise leuchtet dann die Anzeigeeinrichtung 114 dauerhaft.

Wenn der Bediener N das Schaltelement 24 loslässt, wird beispielsweise der Stromfluss über den Antriebsmotor 22 beendet. Dies kann die Steuerungseinrichtung 46 erfassen, beispielsweise anhand eines entsprechenden Stromsensors 62. Auch die Versorgungsspannung oder Busspannung UB1 ist in diesem Fall niedriger oder kleiner. Weiterhin ist es möglich, dass das Energiespeichermodul 40 über die Datenschnittstellen oder Busschnittstellen 34, 54 eine Nachricht 753 "Motor ausgeschaltet" aktiv sendet. Eines oder mehrere dieser Auslöseereignisse, die durch den Bedienschritt 403 des Bedieners N ausgelöst werden, führen zu einer Funktion 436 "Ausschalten" des Energiespeichermoduls 40. Diese sendet dann in einem Sendevorgang 437 einen Steuerbefehl 462 zum Ausschalten des Saugaggregats 75, vorzugsweise nach einer vorbestimmten Nachlaufzeit für das Saugaggregat 75, wobei die Nachricht oder der Steuerbefehl 462 eine Ausschaltkennung 463 enthält. In der Ausschaltkennung 463 kann beispielsweise eine Nachlaufzeit für den Staubsauger 70 bzw. das Saugaggregat 75 angegeben sein.

Die Anfragenachricht 750 und die Nachricht 753 bilden Empfangsinformationen EM, die das Energiespeichermodul 40 an der Datenschnittstelle 54 empfängt, um in Abhängigkeit davon Sendesignale SII, nämlich beispielsweise die Anmeldenachricht 440 an der Drahtlos-Kommunikationsstelle 60 auszugeben.

Die Antwortnachricht 445 ist zum Beispiel ein Empfangssignal ESI, anhand dessen das Energiespeichermodul 40 an der Datenschnittstelle 54 die Antwortnachricht 752 als eine Sendeinformation SM ausgibt.

In einer Funktion 427 "Ausschalten" steuert die Kommunikationsvorrichtung 100 direkt oder unter Ansteuerung der Steuerungseinrichtung 86 das Saugaggregat 75 zum Abschalten und die Anzeigeeinrichtung 114 zur Anzeige der beendeten Ansteuerung an. Beispielsweise gibt die Funktion 427 einen Ansteuerungsbefehl 425 an das Saugaggregat 75 direkt oder über die Steuerungseinrichtung 86, nämlich die Datenschnittstellen 83 und 108.

Wenn das Schaltelement 24 der Werkzeugmaschine 20 wieder betätigt wird, kann das Energiespeichermodul 40 weitere nachfolgende Steuerbefehle 460 und 462 senden, um das Saugaggregat 75 einzuschalten und auszuschalten. Vorteilhafterweise ist vorgesehen, dass nach einer vorbestimmten Zeit die jeweilige Steuerverbindung zwischen Energiespeichermodul und Extern-Kommunikationsvorrichtung 100 beendet ist, so dass beispielsweise die Extern-Kommunikationsvorrichtung in einen Zustand 428 (entsprechend dem Zustand 411) übergeht und zur Herstellung einer Steuerverbindung autorisierte Geräte sucht. Das Energiespeichermodul 40 hingegen geht in einen Zustand 439, nämlich einen Zustand "Schlafen", entsprechend dem Zustand 430. Wenn die Steuerverbindung vom Energiespeichermodul 40 zur Extern-Kommunikationsvorrichtung 100 oder dem Staubsauger 70 beendet ist, gibt die Funktion 436 zweckmäßigerweise an der Anzeigeeinrichtung 44 diesen neuen Betriebszustand aus, beispielsweise indem die Anzeigeeinrichtung 44 anhand einer Ansteuerung in einem Deaktivierungsschritt 438 zur Signalisierung der beendeten Steuerverbindung angesteuert wird. Die Leuchten 45 leuchten dann beispielsweise nicht mehr blau, sondern grün und signalisieren den Ladezustand des Energiespeichers 42.

Weiterhin ist es möglich, dass die Werkzeugmaschine 20 eine Konfigurationsnachricht 754 über den Bus BU an das Energiespeichermodul 40 sendet. In der Konfigurationsnachricht 754 sind beispielsweise Konfigurationsdaten 755 zur Einstellung des Staubsaugers 70 angegeben, zum Beispiel eine notwendige Saugleistung des Saugaggregats 75, eine typische Partikelmenge in dem von der Werkzeugmaschine 20 erzeugten Staub etc. Das Energiespeichermodul 40 leitet diese Daten vorzugsweise über die Drahtlos-Kommunikationsschnittstelle stelle 60 an die Extern-Kommunikationsvorrichtung 100 zur Konfiguration des Staubsaugers 70 weiter, zum Beispiel als Konfigurationsnachricht 465. Die Extern-Kommunikationsvorrichtung 100 leitet die Konfigurationsdaten 755 an die Steuerungseinrichtung 86 zur weiteren Verarbeitung, insbesondere geeigneten Ansteuerung des Saugaggregats 75 weiter, z.B. anhand eines Sendevorgangs 437'.

Bevorzugt ist es, wenn die Steuerungseinrichtung 86 und/oder die Extern-Kommunikationsvorrichtung 100 die Konfigurationsdaten 755 dauerhaft und der jeweiligen Werkzeugmaschine 20A und 20B zugeordnet speichern, beispielsweise im Speicher 88 und/oder 118.

Weiterhin vorteilhaft ist es, wenn ein Bediener die gespeicherte Konfiguration sozusagen übersteuern kann, beispielsweise durch eine Betätigung der Bedienelementanordnung 77. So kann beispielsweise an einem Schaltelement 78A eine Saugleistung des Saugaggregats 75 einstellbar sein.

Möglich ist es, dass von einem Bediener am Staubsauger direkt eingestellte Saugparameter, insbesondere am Schaltelement 78A oder sonstigen Bedienelementen der Bedienelementanordnung 77 eingestellte Sauparameter, von der Steuerungseinrichtung 86 und/oder der Extern-Kommunikationsvorrichtung 100 dauerhaft und der jeweiligen Werkzeugmaschine 20A und 20B zugeordnet gespeichert werden, beispielsweise im Speicher 88 und/oder 118, wenn der Staubsauger aktuell durch die jeweilige Werkzeugmaschine angesteuert wird, beispielsweise eine der Werkzeugmaschinen 20A oder 20B. Bei diesem Szenario ist es zwar möglich, jedoch nicht unbedingt notwendig, dass die Konfigurationsdaten 755 oder Saugparameter drahtlos von der Werkzeugmaschine 20A oder 20B gesendet werden.

Eine Herstellung einer Steuerverbindung kann aber auch sozusagen automatisch dann geschehen, wenn ein Energiespeichermodul 40 und eine Werkzeugmaschine 20 miteinander verbunden werden. Nachfolgend wird dies am Beispiel eines der Energiespeichermodule 40 erläutert. Es ist aber auch möglich, dass beispielsweise die Drahtlos-Kommunikationsschnittstelle 60C in dieser Art sozusagen automatisch eine jeweilige Steuerverbindung zum Staubsauger 70 oder der Extern-Kommunikationsvorrichtung 100 herstellt, wenn die Energieversorgung durch das Energiespeichermodul 40 sozusagen beginnt bzw. dieses an der Geräteschnittstelle 30 angeordnet wird.

So können beispielsweise das Energiespeichermodul 40 und/oder die Werkzeugmaschine 20 Kapazitätssensoren 66, 36 aufweisen, mit denen Kapazitäten C1 und C2 zwischen den Versorgungskontakten 32A, 32B bzw. 52A, 52B messbar sind. Die kapazitiven Verhältnisse ändern sich nämlich zwischen den Leitungen L1 und L2, also an den energieversorgenden Kontakten oder den energieversorgenden Leitungen dann, wenn ein jeweiliges Energiespeichermodul 40 an einer Werkzeugmaschine 20 befestigt ist. Die Sensoren 36, 66 sind mit den Steuerungseinrichtungen 26, 46 verbunden oder kommunizieren mit diesen. So kann also beispielsweise die Steuerungseinrichtung 46 dann, wenn der Sensor 66 erkennt, dass die Werkzeugmaschine 20 angeschlossen ist, also ein Betriebszustand erzielt ist, automatisch die Anmeldenachricht 440 senden.

Zur Erkennung eines Trennungszustands/oder eines Betriebszustandes zwischen einem Energiespeichermodul 40 und einer Werkzeugmaschine 20 und/oder einem Staubsauger kann mindestens eine, insbesondere ausschließlich, zur Überprüfung des Betriebszustands oder Trennungszustands vorgesehene Überprüfungsnachricht an einer Datenschnittstelle, beispielsweise der die Busschnittstelle BU, vorgesehen sein. Beispielsweise kann eine Art Ping-Nachricht dafür vorgesehen sein. Der Prozessor 27 und/oder ein speziell für den vorgenannten Zweck vorgesehener Prozessor 27A der Werkzeugmaschine 20 oder des Ladegeräts 220 können insbesondere zyklisch eine Überprüfungsnachricht CK senden, anhand derer das Energiespeichermodul 40 beispielsweise erkennt, dass es an die Werkzeugmaschine 20 oder das Ladegerät 220 angeschlossen ist oder keine Verbindung zu einem derartigen Gerät besteht. Es ist möglich, dass zum Empfang der Überprüfungsnachricht CK der Prozessor 47 oder ein speziell für diese Nachricht vorgesehener Prozessor 47A beim Energiespeichermodul 40 vorhanden ist. Der Prozessor 47 und/oder 47A kann als Antwort auf die Überprüfungsnachricht CK beispielsweise eine Antwortnachricht RP versenden.

Auch auf anderem Wege kann sensorisch erfasst werden, ob ein Energiespeichermodul 40 und eine Werkzeugmaschine 20 in einem Trennungszustand oder einem miteinander verbundenen Betriebszustand sind, wenn nämlich die Geräteschnittstellen 30, 50 miteinander verbunden sind.

So kann beispielsweise ein Sensor 58 eine Betätigung des Betätigungselementes 57 der Fixiereinrichtung 55 abtasten. Wenn ein Bediener das Betätigungselement 57 drückt, mithin also die Fixierung der Fixiereinrichtung 55 lösen will, wird dies als ein Übergang vom Betriebszustand in den Trennungszustand gewertet. Das Energiespeichermodul 40, insbesondere die Drahtlos-Kommunikationsschnittstelle 60, kann in diesem Fall beispielsweise die Steuerverbindung S1 oder S2 automatisch beenden. Dazu sendet die Drahtlos-Kommunikationsschnittstelle 60 beispielsweise einen entsprechenden Trennungsbefehl oder eine Trennungsnachricht. Besonders bevorzugt ist es, wenn durch Betätigung des Betätigungselementes 57 auch der Staubsauger 70 abgeschaltet werden kann, weil ja die Komponenten 20 und 40 voneinander getrennt werden. Beispielsweise sendet die Steuerungseinrichtung 46 bei Betätigung des Betätigungselementes 57, was durch den Sensor 58 erfassbar ist, den Steuerbefehl 462.

Es ist aber auch möglich, dass beispielsweise einer oder mehrere Bewegungssensoren vorgesehen sind, nämlich beispielsweise ein Bewegungssensor 59 beim Energiespeichermodul 40 und ein Bewegungssensor 59B bei der Werkzeugmaschine 20. Wenn die Bewegungssensoren 59, 59B gleichförmige Bewegungen signalisieren, können die Steuerungseinrichtungen 46, 26 dies miteinander kommunizieren und dadurch erkennen, dass der Energiespeicher 40 und die Werkzeugmaschine 20 im Betriebszustand, d.h. im aneinander befestigten Zustand, sind.

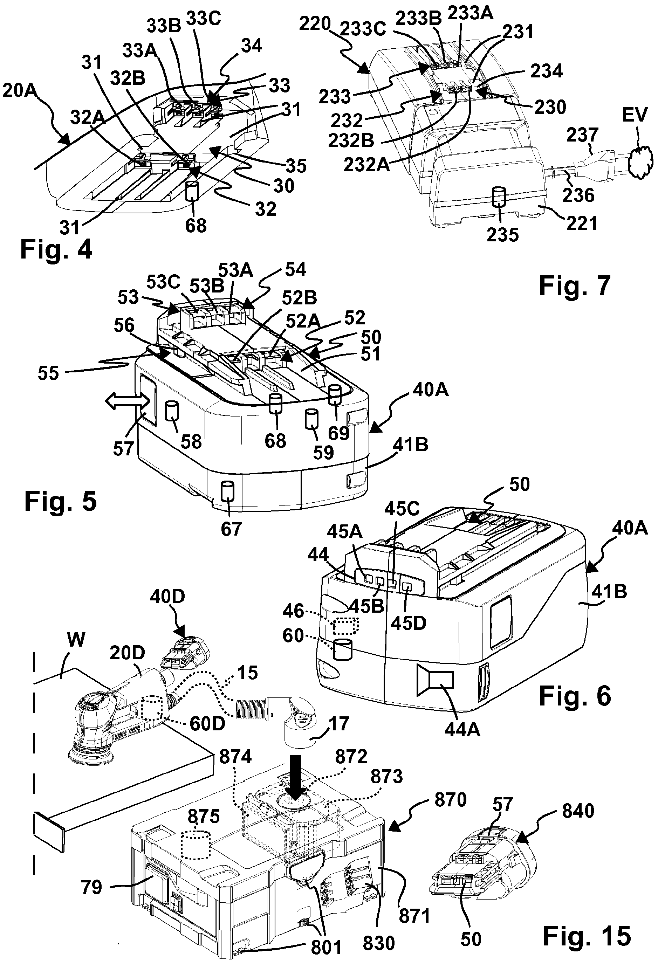

Weiterhin ist es möglich, dass beispielsweise ein optischer Sensor 68 oder ein sonstiger Näherungssensor erfasst, wenn die Geräteschnittstelle 30 an der Geräteschnittstelle 50 befestigt ist. Der optische Sensor oder Näherungssensor 68 ist beispielhaft beim Energiespeichermodul 40A gemäß Figur 5 eingezeichnet, könnte aber ohne weiteres auch an der Geräteschnittstelle 30 der Werkzeugmaschine 20 vorgesehen sein (siehe Figur 4).

Ähnlich wie die Näherungssensoren oder optischen Sensoren 68 (es können beispielsweise auch Ultraschall-Sensoren, magnetische Sensoren oder dergleichen, vorgesehen sein), wird auch ein elektrischer Schalter 68, insbesondere ein Druckschalter oder Tastschalter, dann betätigt, wenn die Steck-Formschlusskonturen 51 und 31 in Eingriff miteinander sind, d.h., wenn die Geräteschnittstellen 30, 50 mechanisch miteinander verbunden sind. Auch der elektrische Schalter 69 kann somit den Betriebszustand vom Trennungszustand der Geräteschnittstellen 30, 50 unterscheiden und dazu führen, dass die Drahtlos-Kommunikationsschnittstelle 60C oder das Energiespeichermodul 40, die Anmeldenachricht 440 senden.

Es ist auch möglich, dass das Energiespeichermodul 40 im Rahmen der Empfangsinformationen EM mindestens eine Statusinformation, insbesondere eine Fehlerinformation und/oder eine Schaltstellung eines Schalters, des elektrischen Geräts und/oder mindestens eine Identifizierungsinformation, zum Beispiel eine Seriennummer, des elektrischen Geräts, empfängt. So kann beispielsweise das Energiespeichermodul 40 eine Fehlerinformation als eine Statusinformation 29C und eine Identifizierungsinformation 29D, zum Beispiel einen eindeutigen Identifizierer oder eine Seriennummer der Werkzeugmaschine 20, von der Werkzeugmaschine 20 empfangen. Dabei ist es möglich, dass die Werkzeugmaschine 20 diese Empfangsinformationen EM spontan über die Datenschnittstelle 54 sendet, d. h. ohne vorherige Abfrage durch das Energiespeichermodul 40 bei der Werkzeugmaschine 20, oder dass das Energiespeichermodul 40 diese Empfangsinformationen EM bei der Werkzeugmaschine 20 abfragt. Die Fehlerinformation kann beispielsweise eine Überhitzung oder elektrische Überlastung der Werkzeugmaschine 20 repräsentieren. Die Identifizierungsinformation 29D kann auch eine Typkennung umfassen, sodass beispielsweise die Art der Werkzeugmaschine 20, insbesondere Schraubgerät, Sägemaschine oder dergleichen, anhand der Identifizierungsinformation 29D erkennbar ist.

Die vorgenannten Empfangsinformationen EM sind beispielsweise nicht sicherheitsrelevant oder geheim zu halten. Insbesondere dann ist es vorteilhaft, wenn das Energiespeichermodul 40 diese Empfangsinformationen EM im Rahmen einer Broadcast-Kommunikation oder Advertising-Kommunikation zyklisch oder periodische und/oder beim Übergang vom Trennungszustand in der Betriebszustand, d. h. beim Anschließen an die Werkzeugmaschine 20, insbesondere unverschlüsselt, versendet. Selbstverständlich kann auch eine verschlüsselte Kommunikation stattfinden, wenn beispielsweise Verschlüsselungsparameter zwischen dem Energiespeichermodul 40 und der Konfigurationsvorrichtung 500 oder einem sonstigen empfangenden Gerät bereits ausgetauscht sind. In allen vorgenannten Szenarien kann beispielsweise die Konfigurationsvorrichtung 500 die Identifizierungsinformation 29D und/oder die Statusinformation 29C von dem Energiespeichermodul 40 empfangen.

Der Staubsauger 70 kann wie erläutert eine oder mehrere Kommunikationsmodule 300 aufweisen. Die Anordnung mit mehreren Konfigurationsmodulen 300A, 300B und 300C ist optional, d.h. es könnte beispielsweise nur eines dieser Kommunikationsmodule vorgesehen sein oder gar keines. Dennoch würde der Staubsauger 70 funktionieren.

Die Kommunikationsmodule 300A können anhand ihrer Kommunikationsschnittstellen 311 dazu genutzt werden, eine Steuerverbindung aufrechtzuerhalten oder herzustellen. So kann beispielsweise eine Steuerverbindung S6 von der Hand-Werkzeugmaschine 20B oder dem Energiespeichermodul 40B zum Staubsauger 70 bzw. der Extern-Kommunikationsvorrichtung 100 hergestellt werden, die zumindest teilweise durch die Kommunikationsmodule 300B und 300C hergestellt und/oder aufrechterhalten wird.

So kann beispielsweise die Drahtlos-Kommunikationsschnittstelle 60C der Werkzeugmaschine 20A oder die Drahtlos-Kommunikationsschnittstelle 60 des Energiespeichermoduls 40B auf einem Abschnitt S61 zunächst mit dem Kommunikationsmodul 300 kommunizieren, beispielsweise um den Steuerbefehl 460 und/oder 462 zu senden, d.h. das Saugaggregat 75 einzuschalten und auszuschalten. Auf einem Kommunikationsabschnitt oder Verbindungsabschnitt S6.2 kommuniziert das Kommunikationsmodul 300 diese Information oder diesen Steuerbefehl zu dem Kommunikationsmodul 300B, welches seinerseits wiederum den empfangenen Steuerbefehl oder die empfangene Information auf einem Verbindungsabschnitt S63 an die Extern-Kommunikationsvorrichtung 100 oder den Staubsauger 70 weiterleitet. Da die Kommunikationsmodule 300B und 300C nur in kurzem Abstand zu den Systemkomponenten 20B / 40B einerseits und andererseits dem Staubsauger 70 bzw. der Kommunikationseinrichtung 100 angeordnet sind, sind die Verbindungsabschnitte S61 und S63 kurz. Dementsprechend kann die Sendeleistung der Extern-Kommunikationsvorrichtung 100 und der Drahtlos-Kommunikationsschnittstelle 60 / 60C besonders klein sein.

Insbesondere ist auf einem kurzen Übertragungsweg zwischen dem jeweiligen Kommunikationsmodul 300B und der Drahtlos-Kommunikationsschnittstelle 60, 60C oder dem Kommunikationsmodul 300C und der Extern-Kommunikationseinrichtung 100 nicht nur die Sendeleistung besonders gering, sondern auch der Sicherheitsaspekt besonders günstig. Beispielsweise können die Empfangsreichweiten der Kommunikationsmodle 300B und 300C derart kurz ausgestaltet sein, dass eine Störinformation eines Dritten oder ein störender Steuerbefehl gar nicht erst von den Kommunikationsmodulen 300B und 330C empfangen und weitergeleitet wird.

Selbstverständlich können die Kommunikationsmodule 300B und 300C auch vom Staubsauger 70 gesendete Informationen zu dem Energiespeichermodul 40B oder der Werkzeugmaschine 20B weiterleiten, d.h. sie können unidirektional entweder vom Staubsauger zur Werkzeugmaschine oder umgekehrt von der Werkzeugmaschine zum Staubsauger oder eben bidirektional arbeiten. Die Gateway-Funktion ist zweckmäßigerweise bidirektional. So kann der Staubsauger 70 beispielsweise über die Steuerverbindung S6, die in diesem Fall eine Meldeverbindung ist, beispielsweise einen Füllstand des Schmutzsammelraums 73 mitteilen, so dass gegebenenfalls die Werkezugmaschine 20B ihren Betrieb einstellt, wenn eine Staubabfuhr nicht mehr möglich ist.

Ohne weiteres können auch die Kommunikationsmodule 300A und 300B eine Gateway-Funktion in Zusammenhang mit der Werkzeugmaschine 22A und dem Staubsauger 70 in dieser Weise realisieren.

Es ist nicht unbedingt notwendig, dass für die Realisierung der Gateway-Funktion zwei Kommunikationsmodule vorgesehen sind, von denen eines näher beim Staubsauger und das andere näher bei der Werkzeugmaschine oder deren Energiespeichermodul angeordnet ist. Beispielsweise ist es möglich, dass ein Kommunikationsmodul 300, beispielsweise das Kommunikationsmodul 300A, als Gateway zwischen der Extern-Kommunikationsvorrichtung 100 und dem Energiespeichermodul 40A dient.

Auch bei der Herstellung von Kommunikationsbeziehungen und insbesondere Steuerverbindungen können die Kommunikationsmodule 300 unterstützen. Weiterhin kann auf die nachfolgende Weise ein Kommunikationsmodul 300 auch für die steuernde oder kommunizierende Drahtlosverbindung mit der Extern-Kommunikationsvorrichtung 100 autorisiert werden.

Beispielsweise hat die Extern-Kommunikationsvorrichtung 100 eine Kommunikationsschnittstelle 109 nach einem zweiten Standard, der sich von der Kommunikationsschnittstelle 110 unterscheidet. Beispielsweise handelt es sich bei dem ersten Standard der Kommunikationsschnittstelle 110 um einen Bluetooth-WLAN oder dergleichen anderen Standard, während der zweite Standard der Kommunikationsschnittstelle 109 für eine Nahfeld-Kommunikation ausgerichtet ist, beispielsweise eine RFID-Kommunikationsschnittstelle ist oder eine NFC-Kommunikationsschnittstelle ist.

Auch weitere Komponenten des Systems 10 haben zweckmäßigerweise weitere Kommunikationsschnittstellen diese zweiten Standards. So ist beispielsweise bei dem Kommunikationsmodul 300 eine derartige Kommunikationsschnittstelle 318 vorhanden. Auch das Energiespeichermodul 40 kann eine derartige Kommunikationsschnittstelle des zweiten Standards haben, nämlich eine Kommunikationsschnittstelle 67. Schließlich kann die Kommunikationsschnittstelle des zweiten Standards auch direkt am oder im Saugergehäuse 71 vorgesehen sein, insbesondere als eine Kommunikationsschnittstelle 84.

Die Kommunikationsschnittstellen des zweiten Standards, beispielsweise des Nahfeld-Kommunikationsstandards, dienen dazu, Kommunikationsparameter zu speichern und/oder zu übertragen, die für die Steuerverbindungen oder Meldeverbindung S1, S2 notwendig sind. Auch Steuerverbindungen S3 und S4 der Kommunikationsmodule 300A und 300B, mit denen diese den Staubsauger 70 ansteuern, beispielsweise das Saugaggregat 75 einschalten und ausschalten, können auf diesem Wege sozusagen autorisiert oder parametriert werden. Schließlich kann auf die Gateway-Funktion, d.h. die Steuerverbindung S6, anhand der Kommunikationsschnittstellen des zweiten Standards eingestellt werden.

Nachfolgend werden einige Varianten vorgestellt:
Beispielsweise sind bei der Kommunikationsschnittstelle 84 und/oder Kommunikationsschnittstelle 109 als Kommunikationsparameter 85 die Adresskennung 441 des Staubsaugers 70 und der Verschlüsselungsparameter 451 gespeichert, die zur Herstellung einer Steuerverbindung mit dem Staubsauger 70 oder der Extern-Kommunikationsvorrichtung 100 notwendig sind. Wenn eines der Kommunikationsmodule 300A, 300B oder 300C mit seiner Kommunikationsschnittstelle 318 in den Sendebereich der Kommunikationsschnittstelle 109 und/oder der Kommunikationsschnittstelle 84 gelangt, kann es die Kommunikationsparameter 85 auslesen. Auch die umgekehrte Vorgehensweise ist möglich, dass beispielsweise die Kommunikationsparameter des Kommunikationsmoduls 300 bei diesem gespeichert sind und durch eine oder beide der Kommunikationsschnittstellen 109, 84 auslesbar sind.

Auf diese Weise können aber auch die Drahtlos-Kommunikationsschnittstellen 60 oder 60C konfiguriert werden. So kann beispielsweise die Kommunikationsschnittstelle 37 der Werkzeugmaschine 20 die Kommunikationsparameter 85 auslesen, wenn sie in der Nähe der Kommunikationsschnittstelle 84 ist. Auch ein jeweiliges Energiespeichermodul 40 kann anhand seiner Kommunikationsschnittstelle 67 die Kommunikationsparameter 85 von der Kommunikationsschnittstelle 84 und/oder 109 auslesen bzw. von dieser empfangen.

Zur Herstellung einer Steuerverbindung des Kommunikationsmoduls 300 und/oder des Energiespeichermoduls 40B zur Extern-Kommunikationsvorrichtung 100 kann auch beispielsweise eine Kommunikationsschnittstelle 909 in Gestalt beispielsweise eines NFC-Senders oder RFID-Senders realisiert werden. Die Kommunikationsschnittstelle 909 ist beispielsweise am Längsendbereich 17 des Saugschlauchs 15 angeordnet. Beispielsweise umfasst die Kommunikationsschnittstelle 909 Kommunikationsparameter für den ersten Standard, die von einer entsprechenden lesenden Kommunikationsschnittstelle 910 des Staubsaugers 70 oder 870 auslesbar ist. Bei der Kommunikationsschnittstelle 909 kann es sich beispielsweise um einen RFID-Tag, NFC-Tag oder dergleichen handeln. Bei der Kommunikationsschnittstelle 909 können auch weitere Parameter 911 gespeichert sein, zum Beispiel eine Schlauchgeometrie des Saugschlauchs 15, insbesondere dessen Länge und/oder Durchmesser etc., wobei diese weiteren Parameter 911 durch die Kommunikationsschnittstelle 910 auslesbar sind.

Es ist weiterhin möglich, dass eine oder mehrere der Kommunikationsschnittstellen des zweiten Standards sozusagen als Transfer-Kommunikationsparameter dienen. Beispielsweise kann das Kommunikationsmodul 300B die Kommunikationsparameter 85 direkt am Saugergehäuse 71 auslesen, nämlich an der Kommunikationsschnittstelle 84 und/oder 109, und diese dann zu der Werkzeugmaschine 20B und/oder dem Energiespeichermodul 40B übertragen. Das Kommunikationsmodul 300B ist in diesem Fall sozusagen ein Zwischenspeicher für die Kommunikationsparameter 85.

Eine weitere Möglichkeit, die Extern-Kommunikationsvorrichtung 100 bzw. den Staubsauger 70 in den Bereitschaftsmodus zur Herstellung einer Steuerverbindung zu schalten, wird beispielsweise durch einen Beschleunigungssensor oder Bewegungssensor 312 realisiert. Der Beschleunigungssensor 312 sendet Beschleunigungssignale an die Steuerungseinrichtung 336, welche anhand der Bewegungssignale oder Meldesignale des Beschleunigungssensors 312 eine typische Ansteckbewegung oder Montagebewegung des Saugschlauchs 15 an der Handwerkzeugmaschine 20A, 20B erkennt. Beispielsweise erkennt die Steuerungseinrichtung 336 anhand des Beschleunigungssensors 312 eine typische Steckbewegung, die eine Linearbewegung und/oder Rotationsbewegung darstellt, die eine vorbestimmte Länge hat, nämlich den Steckweg beim Anstecken des Saugschlauchs 15 an einen der Saugauslässe 39.

Weiterhin ist es möglich, dass anhand eines weiteren Bewegungssensors, der an Bord des Energiespeichermoduls oder der Werkzeugmaschine ist, ein Bewegungsmuster erkannt wird. So kann beispielsweise der Bewegungssensor 59 des Energiespeichermoduls 40 ein Bewegungsmuster erfassen und dieses über die Drahtlos-Kommunikationsschnittstelle 60 an das Kommunikationsmodul 300 übertragen. Das Kommunikationsmodul 300 vergleicht das Bewegungsmuster des Bewegungssensors 59 mit einem Bewegungsmusters des Bewegungssensors oder Beschleunigungssensors 312. Sind beide Bewegungsmuster identisch, ist dies in Indiz dafür, dass der Saugschlauch 15 an der Werkzeugmaschine 20 befestigt ist oder befestigt wird, beispielsweise wenn die Bewegungsmuster gleich gerichtet, jedoch gegenläufig sind. Anhand dieser Information kann das Kommunikationsmodul 300 beispielsweise die Steuerverbindung S1 oder S2 aufbauen. Die Erkennung des Bewegungsmusters des Beschleunigungssensors 312 und/oder 59 kann also beispielsweise die Herstellung einer jeweiligen Steuerverbindung S1 oder S2 und/oder die Pairing-Funktion auslösen, insbesondere das Senden der Anmeldenachricht 360.

Zur Konfiguration und/oder Steuerung kann auch ein außerhalb des Systems Werkzeugmaschine, Energiespeichermodul, Saugschlauch und Staubsauger stehendes Gerät zum Einsatz kommen, nämlich beispielsweise eine Konfigurationsvorrichtung 500. Die Konfigurationsvorrichtung 500 ist beispielsweise ein Computer, insbesondere ein Smartphone, eine Smartwatch, ein Tablet-Computer oder dergleichen. Die Konfigurationsvorrichtung 500 weist ein Gehäuse 501 auf, welche mobil und unabhängig vom Saugschlauch 15 und Staubsauger 70 ist. Das Gehäuse 501 ist weiterhin nicht Bestandteil einer der Werkzeugmaschinen 20 oder der Energiespeichermodule 40. Denkbar wäre aber, dass beispielsweise an dem Staubsauger 70 eine Modulaufnahme 96 vorhanden ist, in die die auch als Fernbedienung geeignete Konfigurationsvorrichtung 500 einsteckbar ist. Die Konfigurationsvorrichtung 500 weist eine Anzeigeeinrichtung 502 sowie Eingabemittel 503 zur Ausgabe von Informationen für den Bediener N sowie zur Eingabe von Befehlen. Die Eingabemittel 503 können Bestandteil der Anzeigeeinrichtung 502 sein, beispielsweise in der Art eines Touchpads.

Die Konfigurationseinrichtung 500 weist eine Steuerungseinrichtung 506 mit einem Prozessor 507 sowie einem Speicher 508 auf. Im Speicher 508 sind eines oder mehrere Programmodule 509 gespeichert, deren Programmcode vom Prozessor 507 ausführbar ist. Weiterhin ist in dem Speicher 508 ein Konfigurationsmodul 510 gespeichert, welches zur Konfiguration der Steuerverbindungen S1 - S4 geeignet sein kann. Das Konfigurationsmodul 510 weist Programmcode auf, der vom Prozessor 507 ausführbar ist. Die Konfigurationsvorrichtung 500 kann in der Art der Kommunikationsmodule 300 den Staubsauger 70 direkt ansteuern. Dazu ist beispielsweise eine Kommunikationsschnittstelle 511 vorgesehen, insbesondere eine Bluetooth-Schnittstelle, WLAN-Schnittstelle oder dergleichen, die direkt mit der Extern-Kommunikationsvorrichtung 100 kommunizieren kann. Beispielsweise ist eine Eingabe an den Eingabemitteln 503 in der Art einer Betätigung eines der Anmelde-Bedienelemente 316 oder 106, möglich. Die Konfigurationsvorrichtung 500 führt dann beispielsweise Programmcode des Konfigurationsmodules 510 aus, um die Extern-Kommunikationsvorrichtung 100 in den Bereitschaftsmodus zu schalten, in welchem die Energiespeichermodule 40 oder die Werkezugmaschine 20 zur Herstellung der Steuerverbindung autorisierbar sind.

Weiterhin weist die Konfigurationsvorrichtung 500 zweckmäßigerweise eine Konfigurationsschnittstelle 512 mit dem zweiten Standard auf, beispielsweise eine RFID-Schnittstelle. Somit kann die Konfigurationsvorrichtung 500 beispielsweise die Konfigurationsparameter 85 auslesen und/oder senden.

An dieser Stelle sei noch nachgetragen, dass selbstverständlich die Werkzeugmaschinen 20 mit ihren Kommunikationsschnittstellen 37 des weiten Standards und/oder die Energiespeichermodule 40 mit ihren Kommunikationsschnittstellen 67 unmittelbar in die Nähe des Saugergehäuses 71 und/oder der Extern-Kommunikationsvorrichtung 100 gebracht werden können, um die Kommunikationsparameter 85 auszulesen und/oder ihre Kommunikationsparameter dorthin zu senden.

An dieser Stelle sei noch nachgetragen, dass selbstverständlich die Werkzeugmaschinen 20 mit ihren Kommunikationsschnittstellen 37 des weiten Standards und/oder die Energiespeichermodule 40 mit ihren Kommunikationsschnittstellen 67 unmittelbar in die Nähe des Saugergehäuses 71 und/oder der Extern-Kommunikationsvorrichtung 100 gebracht werden können, um die Kommunikationsparameter 85 auszulesen und/oder ihre Kommunikationsparameter dorthin zu senden. Somit bilden auch die Werkzeugmaschinen 20 und die Energiespeichermodule 40 ebenso wie der Staubsauger 70 Konfigurationsmodule mit einer jeweils einer Kommunikationsschnittstelle des ersten und des zweiten Kommunikationsstandards.

Weiterhin eignet sich die Konfigurationsvorrichtung 500 beispielsweise dazu, eine Software oder mindestens eine Programmmodul, Konfigurationsdaten oder dergleichen in eines der Energiespeichermodule 40 und/oder eine der Werkzeugmaschinen 20 zu laden. Die Drahtlos-Kommunikationsschnittstellen 60, 60C kommunizieren dabei vorzugsweise direkt mit der Kommunikationsschnittstelle 511 der Konfigurationsvorrichtung 500. Auf diesem Wege kann beispielsweise ein Programmodul 49 zu einem Energiespeichermodul 40 oder ein Programmodul 29 zu einer Werkzeugmaschine 20 übertragen werden. Weiterhin können so beispielsweise Konfigurationsdaten 29A, zum Beispiel Betriebsparameter und/oder Maschineneinstellungen (Maximaldrehzahlen, maximale Leistungen, Nutzungsdauer-Begrenzungen oder dergleichen), für die Werkzeugmaschine 20 übertragen werden. Ein Programmodul 29 kann direkt beispielsweise über die Kommunikationsschnittstelle 60 zu der Werkzeugmaschine 20 oder indirekt über ein Energiespeichermodul 40, also dessen Drahtlos-Kommunikationsschnittstelle 60, und über die miteinander kommunizierenden Datenschnittstellen 34, 54 vom Energiespeichermodul 40 weiter zur Werkzeugmaschine 20, insbesondere deren Steuerungseinrichtung 26 übertragen werden.

Selbstverständlich ist auch eine Gateway-Funktion einer Werkzeugmaschine zum Energiespeichermodul hin möglich, d.h. dass beispielsweise die Drahtlos-Kommunikationsschnittstelle 60C ein Programmodul 49 für ein Energiespeichermodul 40 empfängt und über die Datenschnittstellen 34, 54 an das Energiespeichermodul 40 überträgt.

In umgekehrter Richtung können beispielsweise von dem Energiespeichermodul 40 Daten der Werkzeugmaschine 20 empfangen und an die Konfigurationsvorrichtung 500 übertragen werden, so zum Beispiel Protokolldaten 29B, insbesondere Daten eines Fehlerspeichers, einer Log-Datei oder dergleichen. In dem Fehlerspeicher können beispielsweise beim Betrieb der Werkzeugmaschine 20 aufgetretene Fehler, insbesondere Temperaturüberschreitungen oder dergleichen, enthalten sein. Die Log-Datei enthält beispielsweise Daten über die Nutzung der Werkzeugmaschine 20. Unter Nutzung des Energiespeichermoduls 40, das sozusagen als Gateway arbeitet, können beispielsweise Nutzungsdauer, Fehlersituationen oder dergleichen aus der Werkzeugmaschine 20 anhand der Konfigurationsvorrichtung 500 ausgelesen werden. Die Werkzeugmaschine 20 braucht keine eigene Funkschnittstelle oder sonstige Drahtlos-Schnittstelle.

Auf den Steuerverbindungen S1 - S6 können steuernde Informationen versendet werden, beispielsweise Schaltbefehle für das Saugaggregat 75, Staubklasse, Drehzahlstellung, Leistungsaufnahme, Anpressdruck und Partikelaufkommen oder Staubaufkommen einer jeweiligen Werkzeugmaschine 20. Ferner ist eine Konfiguration des Staubsaugers 70 möglich, d.h. dass über eine oder mehrere der Steuerverbindungen S1 - S6 Konfigurationsdaten oder Meldedaten von der Werkzeugmaschine 20 und/oder der Energiespeichermodule 40 zum Staubsauger 20 übertragen werden, beispielswiese Nachlaufzeit nach Ausschalten des Saugaggregats, benötigte Leistung des Saugaggregats oder dergleichen.

Die Konfigurationsvorrichtung 500 könnte sich gemäß dem Funktions- und Kommunikationsablauf 400 temporär bei der Extern-Kommunikationsvorrichtung 100 anmelden. Bevorzugt ist jedoch eine dauerhafte Anmeldung in der Art der Kommunikationsmodule 300. Zur Autorisierung bzw. Anmeldung der Konfigurationsvorrichtung 500 beim Staubsauger 70 oder der Extern-Kommunikationsvorrichtung 100 ist beispielsweise das Anmelde-Bedienelement 106 lange zu drücken. Auf diesem Wege wird sichergestellt, dass nur ein autorisiertes und berechtigtes Gerät angemeldet ist.

Nachfolgend wird noch ein Priorisierungs- und Sicherungskonzept vorgestellt:
Zu einer vorrangigen Ansteuerung des Staubsaugers 70 sind die dauerhaft bei dem Staubsauger 70 zur Steuerung angemeldeten Komponenten des Systems 10 vorgesehen, z.B. die netzgebundene Werkzeugmaschine 20C und die die Kommunikationsmodule 300 sowie die Konfigurationsvorrichtung 500. Wenn von einer dieser Komponenten ein Einschaltsignal oder Ausschaltsignal für das Saugaggregat 75 kommt, wird dies von dem Staubsauger 70, insbesondere dessen Steuerungseinrichtung 86, vorrangig vor einem entsprechenden Steuerbefehl der mit Energiespeichermodul 40 ausgestatten Werkzeugmaschinen 20A und 20C behandelt.

Weiterhin ist eine Bedienung an einem der Bedienelemente der Bedienelementanordnung 77 vorrangig. Wenn also beispielsweise das Schaltelement 78 betätigt wird, ist jede andere Steuerverbindung nachrangig.

Bei den Fernbedienungen, also beispielsweise den Kommunikationsmodulen 300 oder der Konfigurationsvorrichtung 500, ist eine Eins-zu-eins-Beziehung zu dem Staubsauger 70 vorgesehen. Somit kann eine Fernbedienung nicht irrtümlich einen anderen Staubsauger ansteuern. Ebenfalls ist immer vorteilhaft, wenn immer nur eine Werkzeugmaschine mit Energiespeichermodul beim Staubsauger 70 autorisiert und kann diesen ansteuern. Sobald eine weitere oder andere Werkzeugmaschine autorisiert wird, wird die Autorisierung der vorher autorisierten Maschine gelöscht. Somit ist also immer nur eine der Steuerverbindungen S1 oder S2 beim konkreten Ausführungsbeispiel möglich.

Anstelle der Stromerfassung der Steckdose 79 oder in Ergänzung dazu könnte auch eine Druckluft-Erfassung vorgesehen sein. Somit kann beispielsweise ein mit Druckluft betriebenes Gerät, beispielsweise eine Schleifmaschine oder Poliermaschine, an den Staubsauger 70 angeschlossen werden. Wird diese eingeschaltet oder ausgeschaltet, läuft das Saugaggregat 75 oder wird wieder ausgeschaltet. Ein entsprechender Druckluftsensor ist in diesem Fall an der Anschlusseinrichtung vorhanden. Die Anschlusseinrichtung kann eine Durchfluss-Einrichtung sein, d.h. dass Druckluft einerseits in den Staubsauger 70 eingespeist und andererseits von der in der Zeichnung nicht dargestellten Druckluftmaschine sozusagen abgegriffen wird. Wird eine Druckluftmaschine oder Netzmaschine (Werkzeugmaschine 20C) eingeschaltet und ist mit dem Staubsauger 70 verbunden, hat dies höchste Priorität. Eine mittlere Priorität haben die Kommunikationsmodule 300 und die Konfigurationsvorrichtung 500 ebenso wie das Schaltelement 78.

Die niedrigste Priorität haben die Akkumaschinen bzw. mit Energiespeichermodulen versehenen Werkezeugmaschinen 20A, 20C.

Zur Aufhebung einer Autorisierung bzw. zum Beenden einer Steuerverbindung S1 - S6 kann vorteilhaft vorgesehen sein, dass dies durch eine Beendigung der jeweiligen Energieversorgung ausgelöst wird. Wenn also beispielsweise ein Energiespeichermodul 40A, 40B von der der Werkzeugmaschine 20A, 20B getrennt wird, werden die Steuerverbindungen S1 oder S2 automatisch beendet. Auch beim Entfernen der Energieversorgung 310 des Konfigurationsmoduls 300 wird automatisch die Autorisierung bei dem Staubsauger 70 aufgehoben. Vorteilhaft ist es dabei, wenn das Energiespeichermodul 40 oder die Werkzeugmaschine 20 bei einer derartigen Trennung noch einen Schaltbefehl zum Ausschalten des Saugaggregats 75 sendet.

Eine Fernbedienung, beispielsweise das Kommunikationsmodul 300 oder die Konfigurationsvorrichtung 500, meldet sich zweckmäßigerweise mit einer neuen Identität bei der Extern-Kommunikationsvorrichtung 100 oder der Drahtlos-Schnittstelle 60 an, wenn die Energieversorgung beendet ist, beispielsweise die Energieversorgung 310 entfernt wurde. Somit kann beispielsweise eine neue Verschlüsselung eingerichtet werden. Wenn eine neue Identität vorhanden ist, d.h. beispielsweise eine neue Adresskennung vorhanden ist, sind beide Kommunikationspartner bereit, neue Verschlüsselungsparameter auszuhandeln. Wenn miteinander konkurrierende Drahtlos-Kommunikationsschnittstellen 60, 60C eine Steuerverbindung mit dem Staubsauger 70 oder der Extern-Kommunikationsvorrichtung 100 herstellen wollen, wird beispielsweise die jeweils erste sich anmeldende Drahtlos-Kommunikationsschnittstelle 60 akzeptiert. Wenn also beispielsweise das Schaltelement 24 der Werkzeugmaschine 20A vor dem Schaltelement 24 der Werkezugmaschine 20C während des Bereitschaftsmodus der Extern-Kommunikationsvorrichtung 100 gedrückt wird, wird die Steuerverbindung S1 vorranging hergestellt.

Weiterhin ist es vorteilhaft, dass bei konkurrierenden Maschinen diejenige die Steuerverbindung herstellen kann, welche näher bei der empfangenden Extern-Kommunikationsvorrichtung 100 ist. Im Ausführungsbeispiel gemäß Figur 1 könnte beispielsweise dies das Energiespeichermodul 40A sein, welches die Steuerverbindung S1 herstellen will. Beispielsweise kann die Drahtlos-Kommunikationsschnittstelle 60 in die Anmeldenachricht 440 eine Signalstärkeninformation 448 mit der Signalstärke schreiben, mit der sie die Anmeldenachricht 440 sendet.

Anhand eines die Signalstärke messenden Sensors 111 kann die Extern-Kommunikationsvorrichtung 100 die Stärke des Signals, mit der die Anmeldenachricht 440 empfangen wird, messen und mit der Signalstärkeninformation 448 vergleichen. Daraus lässt kann die Steuerungseinrichtung 86 dann ein Wert für einen Abstand zwischen den Komponenten 40A und 100 ermitteln.

Die Drahtlos-Kommunikationsschnittstelle 60C oder das Energiespeichermodul 40B sind jedoch weiter von der Extern-Kommunikationsvorrichtung 100 entfernt, werden also nachrangig behandelt.

Es ist auch möglich, dass keine Signalstärkeinformation 448 in der Anmeldenachricht 440 enthalten ist. In dieser Situation kann der Sensor 111 die Signalstärke der Anmeldenachricht 440 beispielsweise mit einem Schwellwert vergleichen.

Weiterhin ist es möglich, dass der Sensor 111 beispielsweise die Signalstärken der Anmeldenachrichten 440 der Energiespeichermodule 40A und 40B direkt miteinander vergleicht und ausschließlich oder früher, d. h. mit einer kürzeren Antwortzeit, auf diejenige Anmeldenachricht 440 reagiert, die eine größere Signalstärke aufweist.

Eine Priorisierung von näher bei der Extern-Kommunikationsvorrichtung 100 angeordneten Kommunikationspartnern kann beispielsweise vorsehen, dass die Extern-Kommunikationsvorrichtung 100 unterschiedliche Antwortzeiten einstellt. Das ist in Figur 16 angedeutet. Beispielsweise ist eine Antwortzeit AS(t) in Abhängigkeit von einer Signalstärke S, die der Sensor 111 misst, größer oder kleiner. So kann beispielsweise die Extern-Kommunikationsvorrichtung 100 auf die Anmeldenachricht 440 des Energiespeichermoduls 40A, welche eine größere Signalstärke aufweist, schneller reagieren und eine Antwortnachricht senden, beispielsweise die Anmeldebestätigungsnachricht 445, als auf eine entsprechende Anmeldenachricht 440 des Energiespeichermoduls 40B.

Bevorzugt ist es, wenn die im Speicher 118 der Extern-Kommunikationsvorrichtung 100 gespeicherten Kommunikationsparameter, beispielsweise die Adresskennungen 446 und 446C und die zugeordneten Verschlüsselungsparameter 451, 451C, nach einem vorbestimmten Zeit und/oder nach vollständiger Trennung des von einer Energieversorgung gelöscht werden. Auch bei dem mobilen Gerät, nämlich beispielsweise dem Energiespeichermodul 40A, 40B, ist es vorteilhaft, wenn die Kommunikationsparameter aus dem Speicher 48 nach einem vorbestimmten Zeit und/oder nach dem Trennen einer Energieversorgung gelöscht werden.

Weiterhin ist es möglich, dass eine Autorisierung eines mobilen Geräts, nämlich einer Werkzeugmaschine 20 oder eines Energiespeichermoduls 40, bei der die Extern-Kommunikationsvorrichtung gelöscht wird, d.h. dass die Steuerverbindungen S1, S2 als gelöscht gelten, wenn zwar die jeweilige Werkzeugmaschine 20, deren Energiespeichermodul 40 den Staubsauger 70 eingeschaltet hat, jedoch eine andere Funktion, beispielsweise das Schaltelement 78 oder die Netz-Werkzeugmaschine 20C den Stausauger wieder ausgeschaltet hat.

Weiterhin ist es zweckmäßig, wenn die Kommunikationsparameter bei einem mobilen Gerät, welches eine Steuerverbindung aufbauen kann, in Zusammenhang mit einem Ladevorgang zurückgesetzt werden, wenn also beispielsweise das Energiespeichermodul 40 an das Ladegerät 220 angeschlossen wird, werden die Parameter 441, 451, gelöscht.

Durch eine entsprechende Betätigung des Anmelde-Bedienelements 316 des Kommunikationsmoduls 300, beispielsweise ein entsprechend langes Drücken, kann auch eine Drahtlos-Kommunikationsverbindung zwischen dem Kommunikationsmodul 300 und der Konfigurationsvorrichtung 500 hergestellt werden, z.B. für einen Software-Update oder dergleichen.

Ein in der Figur 15 dargestelltes System umfasst eine Werkzeugmaschine 20D, welche eine netzgebundene Werkzeugmaschine oder mit einem Energiespeichermodul 40D betreibbare Werkzeugmaschine ist. Das Energiespeichermodul 40D sowie ein weiteres Energiespeichermodul 840, welches zum Betrieb eines Staubsaugers 870 geeignet ist, entsprechen funktional beispielsweise dem Energiespeichermodul 40B. Auch die Bauform ist erkennbar aus der Zeichnung dieselbe.

Bei der Werkzeugmaschine 20D handelt es sich beispielsweise um ein Schleifgerät zum Schleifen eines Werkstücks W. Anhand des Saugschlauchs 15 und des Anschlussstücks 17 ist die Werkzeugmaschine 20D an den Staubsauger 870 anschließbar, nämlich an einen Saugeinlass 872.

Der Staubsauger 870 ist ein stapelbarer und einer Stapelbox angeordneter Staubsauger. Beispielsweise hat er ein kastenförmiges Saugergehäuse 871, welches auf, unter oder in einen Stapel auf-, unter- oder einstapelbar ist, der beispielsweise auch Behälter zur Aufbewahrung von Handwerkzeugen, Werkzeugmaschinen, z.B. der Werkzeugmaschine 20D und dergleichen umfasst. Auf die Verbindungskomponenten zur Bildung derartiger Stapel soll nicht näher eingegangen werden. Man erkennt beispielsweise an der Frontseite des Saugergehäuses 871 eine Mehrzahl von Koppelelementen 801, beispielsweise Laschen, Riegel oder dergleichen, zur Koppelung mit einem aufgestapelten und/oder untergestapelten Behälter.

In Innenraum des Saugergehäuses 871, welches durch einen Deckel verschließbar ist, ist ein Saugaggregat 875 in der Art des Saugaggregats 75 angeordnet. Ferner befinden sich dort auch ein Filter 874 sowie ein Schmutzsammelraum 873, insbesondere in einem aus dem Saugergehäuse 871 herausnehmbaren Behälter. An der Außenseite oder im Innenraum des Saugergehäuses 871 ist eine Geräteschnittstelle 830 vorgesehen, die mit der Geräteschnittstelle 50 des Energiespeichermoduls 840 kompatibel ist, so dass der Staubsauger 870 mit dem Energiespeichermodul 840 betreibbar ist.

Das Energiespeichermodul 840 kann nun direkt mit dem Energiespeichermodul 40D kommunizieren. So kann die Werkzeugmaschine 20D über ihr Energiespeichermodul 40D das Energiespeichermodul 840D ansteuern, welches seinerseits wiederum den Staubsauger 870 zum Einschalten und/oder Ausschalten des Saugaggregats 875 ansteuert. Dabei erfolgt die Kommunikation über die bereits erläuterten Datenschnittstellen 34, 54 zwischen den jeweiligen ersten und zweiten Systemkomponenten, nämlich der Werkzeugmaschine 20D und dem Energiespeichermodul 40D sowie dem Staubsauger 870 und dem Energiespeichermodul 840. An dieser Stelle sei erwähnt, dass die Anmeldung anhand beispielsweise der Anmeldenachricht 440 auch bei dem System gemäß Figur 15 möglich ist. Es ist aber auch möglich, dass die Energiespeichermodule 40D und 840 bereits ein Kommunikationspaar darstellen, welches zur wechselseitigen Kommunikation autorisiert ist. Somit sind keinerlei Bedienereingriffe notwendig, um die Steuerverbindung zwischen dem Staubsauger und der Werkzeugmaschine herzustellen.

Es ist möglich, dass die Werkzeugmaschine 20 und/oder das Ladegerät 220 die Versorgungsspannung UB1 oder Versorgungsspannung UB2 periodisch oder zyklisch einschalten, sodass das Energiespeichermodul 40 erkennt, dass es mit der Werkzeugmaschine 20 bzw. dem Ladegerät 220 verbunden ist, insbesondere um im Falle der Verbindung mit der Werkzeugmaschine 20 auch dann, wenn diese abgeschaltet ist, eine entsprechende Steuerverbindung mit beispielsweise dem Staubsauger 60 aufrecht zu erhalten oder im Falle der Verbindung mit dem Ladegerät 220 eine derartige Steuerverbindung nicht herzustellen.

Eine bevorzugtes Konzept sieht vor, dass ein Energiespeichermodul 40 und/oder die Konfigurationsvorrichtung 500 und/oder mindestens ein Kommunikationsmodul 300 dann, wenn bereits eine Autorisierung bei einem Staubsauger 60 oder der Extern-Kommunikationsvorrichtung 100 besteht, zunächst eine Verbindung mit diesem sozusagen gespeicherten Staubsauger erneut aufgenommen wird. Eine Autorisierung ist in diesem Fall bereits vorhanden. In diesem Fall entfällt sozusagen die Anmeldenachricht 440 mit der Broadcast-Senderkennung 44x, d.h. eine Anmeldenachricht, die an mehrere grundsätzlich empfangsbereite Staubsauger, nicht nur den Staubsauger 70, gerichtet ist. Vorteilhaft enthält eine Anmeldenachricht 440 in diesem Fall zweckmäßigerweise eine Adresskennung des Staubsaugers 70.

## Patentansprüche

1. Energiespeichermodul (40) zur Verwendung mit einem elektrischen Gerät in Gestalt einer elektrischen Hand-Werkzeugmaschine oder eines Staubsaugers (70, 870), wobei das Energiespeichermodul (40) eine Drahtlos-Kommunikationsschnittstelle (60) zur drahtlosen Kommunikation mit einer von dem Energiespeichermodul (40) entfernt angeordneten Extern-Kommunikationsvorrichtung (100), insbesondere einem Staubsauger (70, 870), und ein Modulgehäuse (41), in dem ein elektrischer Energiespeicher (42), insbesondere eine Speicherzellenanordnung mit mindestens einer elektrisch wiederaufladbaren Speicherzelle (43), angeordnet ist und an dem eine Geräteschnittstelle (50) zur lösbaren Verbindung des Energiespeichermoduls (40) mit dem elektrischen Gerät vorgesehen ist, wobei die Geräteschnittstelle (50) elektrische Geräte-Versorgungskontakte (52) zur elektrischen Energieversorgung des elektrischen Geräts aufweist, **dadurch gekennzeichnet, dass** die Geräteschnittstelle (50) des Energiespeichermoduls (40) eine von den Geräte-Versorgungskontakten (52) separate Datenschnittstelle (54), insbesondere eine Busschnittstelle, zu einer Datenkommunikation mit dem elektrischen Gerät aufweist, wobei das Energiespeichermodul (40) zum Senden von Sendesignalen (SII) über die Drahtlos-Kommunikationsschnittstelle (60) an die Extern-Kommunikationsvorrichtung (100) in Abhängigkeit von über die Datenschnittstelle (54) von dem elektrischen Gerät erhaltenen Empfangsinformationen (EM) und/oder zum Senden von Sendeinformationen (SM) an das elektrische Gerät in Abhängigkeit von über die Drahtlos-Kommunikationsschnittstelle (60) von der Extern-Kommunikationsvorrichtung (100) empfangenen Empfangssignalen (ESI) ausgestaltet ist.

2. Energiespeichermodul nach Anspruch 1, **dadurch gekennzeichnet, dass** die Empfangsinformationen (EM) mindestens eine Betriebsinformation, insbesondere eine Schaltinformation, umfassen, die einen Betriebszustand oder eine Betriebsbereitschaft des mit dem Energiespeichermodul (40) verbundenen elektrischen Geräts anzeigt, und dass das Energiespeichermodul (40) zum Senden einer von der Betriebsinformation abhängigen Sendeinformation (SM), insbesondere eines Steuersignals, über die Drahtlos-Kommunikationsschnittstelle (60) zum Einschalten oder Ausschalten der Extern-Kommunikationsvorrichtung (100), insbesondere des Staubsaugers (70, 870), und/oder zum Senden einer Anmeldenachricht (440) zur Herstellung einer Kommunikationsverbindung, insbesondere Steuerverbindung (S1, S2), mit der Extern-Kommunikationsvorrichtung (100), ausgestaltet ist.

3. Energiespeichermodul (40) nach Anspruch 2, **dadurch gekennzeichnet, dass** die Betriebsinformation oder die Betriebsbereitschaft des elektrischen Geräts davon abhängt, ob ein elektrischer Antriebsmotor (22) und/oder eine Geräte-Steuerungseinrichtung (46) zum Steuern des elektrischen Geräts, eingeschaltet ist und/oder dass die Datenschnittstelle (54) für eine Kommunikation, insbesondere eine Buskommunikation, zwischen dem Energiespeichermodul (40) und dem elektrischen Gerät aktiviert und/oder funktionsfähig ist, und/oder dass die Betriebsinformation mindestens eine Betriebsbereitschaftsinformation, insbesondere eine Busnachricht, umfasst, welche zwischen dem Energiespeichermodul (40) und dem elektrischen Gerät im Rahmen einer Initialisierungskommunikation beim Einschalten der Geräte-Steuerungseinrichtung (46) oder des elektrischen Antriebsmotors (22) übertragen wird.

4. Energiespeichermodul nach einem der Ansprüche 2 oder 3, **dadurch gekennzeichnet, dass** die Betriebsinformation eine Abfrage mindestens einer das Energiespeichermodul (40) kennzeichnenden Information, insbesondere einer elektrischen Kenngröße, durch das elektrische Gerät bei dem Energiespeichermodul umfasst und/oder dass die Betriebsinformation ein Spannungssignal (UB1, UB2) umfasst oder dadurch gebildet ist, wobei das Spannungssignal von einer an der Datenschnittstelle (54) von dem Energiespeichermodul für das elektrische Gerät und/oder einer von dem elektrischen Gerät für das Energiespeichermodul (40) bereitgestellten Versorgungsspannung abhängig ist und/oder dass die Betriebsinformation ein Taktsignal (CL) einer Busleitung der Datenschnittstelle (54) umfasst oder dadurch gebildet ist.

5. Energiespeichermodul nach einem der vorhergehenden Ansprüche, **dadurch gekennzeichnet, dass** es zum Aktivieren oder Deaktivieren der Kommunikation mit der Extern-Kommunikationsvorrichtung (100) in Abhängigkeit davon ausgestaltet ist, ob das über die Geräteschnittstelle (50) mit dem Energiespeichermodul (40) verbundene Gerät ein zum elektrischen Aufladen des Energiespeichers vorgesehenes Ladegerät (220) oder ein von dem Energiespeichermodul (40) mit elektrischer Energie zu versorgendes Gerät ist oder ob die Geräteschnittstelle (50) ungenutzt ist.

6. Energiespeichermodul nach einem der vorhergehenden Ansprüche, **dadurch gekennzeichnet, dass** es zum Aktivieren oder Deaktivieren und/oder Anpassen der Kommunikation mit der Extern-Kommunikationsvorrichtung (100) in Abhängigkeit von einer für das Ladegerät (220) typischen Information und/oder in Abhängigkeit von einer Abfrage mindestens einer zum Aufladen des Energiespeichermoduls (40) erforderlichen Information bei dem Energiespeichermodul (40) und/oder in Abhängigkeit von einer das elektrische Gerät als ein nicht zum Aufladen des Energiespeichermoduls (40) geeignetes Gerät und/oder als ein von dem Energiespeichermodul als mit elektrischer Energie zu versorgendes Gerät kennzeichnenden Empfangsinformation (EM) ausgestaltet ist.

7. Energiespeichermodul (40) nach einem der vorhergehenden Ansprüche, **dadurch gekennzeichnet, dass** es eine, insbesondere optische und/oder akustische, Anzeigeeinrichtung zur Ausgabe mindestens einer die drahtlose Kommunikation zwischen dem Energiespeichermodul (40) und der Extern-Kommunikationsvorrichtung (100) und/oder die Datenkommunikation mit dem elektrischen Gerät betreffenden Kommunikationsinformation aufweist, wobei vorteilhaft vorgesehen ist, dass die Anzeigeeinrichtung in einem ersten Betriebsmodus zur Ausgabe mindestens einer elektrischen Kenngröße des Energiespeichermoduls (40), insbesondere eines Ladezustands des elektrischen Energiespeichers, und in einem zweiten Betriebsmodus zur Ausgabe der mindestens einen Kommunikationsinformation ausgestaltet ist.

8. Energiespeichermodul nach einem der vorhergehenden Ansprüche, **dadurch gekennzeichnet, dass** die anhand von Empfangsinformationen (EM) des elektrischen Geräts generierten Sendesignale (SII) mindestens ein Schaltsignal zum Einschalten und/oder Ausschalten der Extern-Kommunikationsvorrichtung (100), insbesondere des Staubsaugers (70, 870), und/oder mindestens eine Konfigurationsnachricht zur Konfiguration der Extern-Kommunikationsvorrichtung (100), insbesondere des Staubsaugers (70, 870), in Abhängigkeit von einer das elektrische Gerät kennzeichnenden Größe umfassen, wobei vorteilhaft vorgesehen ist, dass die mindestens eine Konfigurationsnachricht zur Konfiguration einer Arbeitseinstellung, insbesondere einer Saugleistung, der Extern-Kommunikationsvorrichtung (100) vorgesehen ist.

9. Energiespeichermodul nach einem der vorhergehenden Ansprüche, **dadurch gekennzeichnet, dass** das an das Energiespeichermodul (40) angeschlossene elektrische Gerät zur Zusammenwirkung mit einem Staubsauger (70, 870) vorgesehen und ausgestaltet ist, wobei der Staubsauger (70, 870) die Extern-Kommunikationsvorrichtung (100) aufweist oder bildet, wobei vorteilhaft vorgesehen ist, dass es zum Schalten, insbesondere Abschalten, und/oder zum Aktivieren oder Deaktivieren des Staubsaugers (70, 870) in Abhängigkeit davon ausgestaltet ist, ob das über die Geräteschnittstelle (50) mit dem Energiespeichermodul (40) verbundene Gerät ein zur Zusammenwirkung mit dem Staubsauger (70, 870) geeignetes und/oder die Absaugfunktion des Staubsauger (70, 870) benötigendes Gerät ist.

10. Energiespeichermodul nach einem der vorhergehenden Ansprüche, **dadurch gekennzeichnet, dass** es zum Senden einer die Extern-Kommunikationsvorrichtung (100) informierenden Trennungssignals, insbesondere eines Abschaltsignals, über die Drahtlos-Kommunikationsschnittstelle (60) bei einer Trennung von dem mit elektrischer Energie zu versorgenden Gerät und/oder bei Unterschreitung eines vorbestimmten Ladezustandswerts des Energiespeichers ausgestaltet ist und/oder dass es zum Übertragen mindestens eines über die Drahtlos-Kommunikationsschnittstelle (60) empfangenen Softwaremoduls oder Programmmoduls (29) und/oder von über die Drahtlos-Kommunikationsschnittstelle (60) empfangenen Konfigurationsdaten (29A) über die Datenschnittstelle (54) an das elektrische Gerät ausgestaltet ist und/oder zum Übertragen von von dem elektrischen Gerät empfangener Protokolldaten (29B) über die Drahtlos-Kommunikationsschnittstelle (60) ausgestaltet ist.

11. Energiespeichermodul nach einem der vorhergehenden Ansprüche, **dadurch gekennzeichnet, dass** die Empfangsinformationen (EM) mindestens eine Statusinformation (29C), insbesondere eine Fehlerinformation und/oder eine Schaltstellung eines Schalters, des elektrischen Geräts und/oder mindestens eine Identifizierungsinformation (29D), zum Beispiel eine Seriennummer und/oder eine Typkennung, des elektrischen Geräts, umfassen und/oder dass es zum Senden mindestens einer Empfangsinformation (EM) über die Drahtlos-Kommunikationsschnittstelle (60) in Abhängigkeit eines Übergangs von einem Trennungszustand in einen Betriebszustand der Geräteschnittstelle (50) oder umgekehrt ausgestaltet, wobei die Geräteschnittstelle (50) in dem Trennungszustand elektrisch und/oder mechanisch von dem elektrischen Gerät getrennt und in dem Betriebszustand mit dem elektrischen Gerät elektrisch und/oder mechanisch verbunden ist.

12. Energiespeichermodul nach einem der vorhergehenden Ansprüche, **dadurch gekennzeichnet, dass** es zum Senden vorbestimmter Empfangsinformationen des elektrischen Geräts als Broadcast-Information oder Advertising-Information über die Drahtlos-Kommunikationsschnittstelle (60) ausgestaltet ist, wobei vorteilhaft vorgesehen ist, dass es bei einem Übergang von dem Trennungszustand in den Betriebszustand zum Senden der vorbestimmten Empfangsinformationen des elektrischen Geräts als Broadcast-Information oder Advertising-Information über die Drahtlos-Kommunikationsschnittstelle (60) ausgestaltet ist.

13. Energiespeichermodul nach einem der vorhergehenden Ansprüche, **dadurch gekennzeichnet, dass** es einen Systembestandteil eines Systems bildet, welches das Energiespeichermodul (40) sowie das elektrische Gerät mit einer Modulschnittstelle oder Geräteschnittstelle (30) zum Anschließen der Geräteschnittstelle (50) des Energiespeichermoduls (40) und/oder die Extern-Kommunikationsvorrichtung (100) bildet.

14. Elektrisches Gerät mit einem Energiespeichermodul (40) nach einem der vorhergehenden Ansprüche.

15. Verfahren zur Verwendung eines Energiespeichermoduls (40) mit einem elektrischen Gerät in Gestalt einer elektrischen Hand-Werkzeugmaschine oder eines Staubsaugers (70, 870), wobei das Energiespeichermodul (40) eine Drahtlos-Kommunikationsschnittstelle (60) zur drahtlosen Kommunikation mit einer von dem Energiespeichermodul (40) entfernt angeordneten Extern-Kommunikationsvorrichtung (100), insbesondere einem Staubsauger (70, 870), und ein Modulgehäuse (41), in dem ein elektrischer Energiespeicher (42), insbesondere eine Speicherzellenanordnung mit mindestens einer elektrisch wiederaufladbaren Speicherzelle, angeordnet ist und an dem eine Geräteschnittstelle (50) zur lösbaren Verbindung des Energiespeichermoduls (40) mit dem elektrischen Gerät vorgesehen ist, wobei die Geräteschnittstelle (50) elektrische Geräte-Versorgungskontakte (52) zur elektrischen Energieversorgung des elektrischen Geräts aufweist, **gekennzeichnet durch** eine Datenkommunikation zwischen dem Energiespeichermodul (40) und der Hand- Werkzeugmaschine über eine von der den Versorgungskontakten separate Datenschnittstelle (54), insbesondere eine Busschnittstelle, wobei das Energiespeichermodul (40) über die Drahtlos-Kommunikationsschnittstelle (60) an die Extern-Kommunikationsvorrichtung (100) in Abhängigkeit von über die Datenschnittstelle (54) von dem elektrischen Gerät erhaltenen Empfangsinformationen (EM) Sendesignale (SII) sendet und/oder Sendeinformationen (SM) an das elektrische Gerät in Abhängigkeit von über die Drahtlos-Kommunikationsschnittstelle (60) von der Extern-Kommunikationsvorrichtung (100) empfangenen Empfangssignalen (ESI) sendet.

## Claims

1. Energy storage module (40) for use with an electric device in the shape of an electric hand-held machine tool or a vacuum cleaner (70, 870), wherein the energy storage module (40) has a wireless communication interface (60) for wireless communication with an external communication apparatus (100) arranged remote from the energy storage module (40), in particular a vacuum cleaner (70, 870) and a module housing (41) in which an electric storage device (42), in particular a storage cell arrangement with at least one electrically rechargeable storage cell is arranged (43) and on which a device interface (50) is provided for detachable connection of the energy storage module (40) to the electric device, wherein the device interface (50) has electric device supply contacts (52) to the electric energy supply of the electric device, **characterised in that** the device interface (50) of the energy storage module (40) has a data interface (54) separate from the device supply contacts (52), in particular a bus interface, for data communication with the electric device, wherein the energy storage module (40) is designed to send transmission signals (SII) via the wireless communication interface (60) to the external communication apparatus (100) as a function of received information (EM) obtained via the data interface (54) from the electric device and/or to send transmission information (SM) to the electric device as a function of received signals (ESI) received via the wireless communication interface (60) from the external communication apparatus (100).

2. Energy storage module according to claim 1, **characterised in that** the received information (EM) comprises at least one operational information item, in particular switching information, which displays an operating status or an operational readiness of the electric device connected to the energy storage module (40), and **in that** the energy storage module (40) is designed to send transmission information (SM) dependent on the operational information, in particular a control signal, via the wireless communication interface (60) to switch on or switch off the external communication apparatus (100), in particular the vacuum cleaner (70, 870) and/or to send a registration message (440) to establish a communication connection, in particular control connection (S1, S2) with the external communication apparatus (100).

3. Energy storage module (40) according to claim 2, **characterised in that** the operational information or operational readiness of the electric device is dependent on whether an electric drive motor (22) and/or a device controller (46) to control the electric device is switched on, and/or **in that** the data interface (54) is activated and/or functionally capable of communication, in particular a bus communication between the energy storage module (40) and the electric device and/or **in that** the operational information comprises at least one operational readiness information item, in particular a bus message, which is transmitted between the energy storage module (40) and the electric device as part of an initialisation communication when the device controller (46) or the electric drive motor (22) is switched on.

4. Energy storage module according to any one of claims 2 or 3, **characterised in that** the operational information comprises a request of at least one information item characterising the energy storage module (40), in particular an electric characteristic variable, through the electric device at the energy storage module and/or in that the operational information comprises a voltage signal (UB1, UB2) or is formed thereby, wherein the voltage signal is dependent on a supply voltage provided to the data interface (54) by the energy storage module for the electric device and/or by the electric device for the energy storage module (40) and/or **in that** the operational information comprises a clock signal (CL) of a bus line of the data interface (54) or is formed thereby.

5. Energy storage module according to any one of the preceding claims, **characterised in that** is designed to activate or deactivate the communication with the external communication apparatus (100) as a function of whether the device connected via the device interface (50) to the energy storage module (40) is a charging device (220) provided for electric charging of the energy storage device or a device to be supplied with electric energy by the energy storage module (40) or whether the device interface (50) is unused.

6. Energy storage module according to any one of the preceding claims, **characterised in that** it is designed to activate or deactivate and/or adjust the communication with the external communication apparatus (100) as a function of information typical of the charging device (220) and/or as a function of a request of at least one information item at the energy storage module (40) required to charge the energy storage module (40) and/or as a function of received information (EM) characterising the electric device as a device not suitable for charging the energy storage module (40) and/or as a device to be supplied with electric energy by the energy storage module.

7. Energy storage module (40) according to any one of the preceding claims, **characterised in that** it has an, in particular optical and/or acoustic display device to output at least one communication information item relating to the wireless communication between the energy storage module (40) and the external communication apparatus (100) and/or the data communication with the electric device, wherein it is preferably provided, that the display device is designed in a first operating mode to output at least one electric characteristic variable of the energy storage module (40), in particular a charging status of the electric energy storage device and in a second operating mode to output the at least one communication information item.

8. Energy storage module according to any one of the preceding claims, **characterised in that** the transmission signals (SII) generated using received information (EM) of the electric device comprise at least one switching signal to switch on and/or switch off the external communication apparatus (100), in particular the vacuum cleaner (70, 870) and/or at least one configuration message to configure the external communication apparatus (100), in particular the vacuum cleaner (70, 870) as a function of a variable characterising the electric device, wherein it is preferably provided, that the at least one configuration message is provided to configure a working position, in particular a suction power, of the external communication apparatus (100).

9. Energy storage module according to any one of the preceding claims, **characterised in that** the electric device connected to the energy storage module (40) is provided and designed for cooperation with a vacuum cleaner (70, 870), wherein the vacuum cleaner (70, 870) has or forms the external communication apparatus (100), wherein it is preferably provided, that it is designed to switch, in particular switch off and/or activate or deactivate the vacuum cleaner (70, 870) as a function of whether the device connected via the device interface (50) to the energy storage module (40) is a device suitable for cooperation with the vacuum cleaner (70, 870) and/or requiring the suction function of the vacuum cleaner (70, 870).

10. Energy storage module according to any one of the preceding claims, **characterised in that** it is designed to send a separation signal informing the external communication apparatus (100), in particular a switch-off signal, via the wireless communication interface (60) in the case of a separation from the device to be supplied with electric energy and/or in the case of falling short of a predetermined charging status value of the energy storage device and/or **in that** it is designed to transmit at least one software module or program module (29) received via the wireless communication interface (60) and/or configuration data (29A) received via the wireless communication interface (60) to the electric device via the data interface (54) and/or to transmit protocol data (29B) received from the electric device via the wireless communication interface (60).

11. Energy storage module according to any one of the preceding claims, **characterised in that** the received information (EM) comprises at least one status information item (29C), in particular error information and/or switching position of a switch, of the electric device and/or at least one identification information item (29D), for example a serial number and/or type designation of the electric device and/or that it is designed to send at least one received information item (EM) via the wireless communication interface (60) as a function of a transition from a separation status to an operating status of the device interface (50) or vice versa, wherein the device interface (50) is electrically and/or mechanically separated from the electric device in the separation status and in the operating status it is electrically and/or mechanically connected to the electric device.

12. Energy storage module according to any one of the preceding claims, **characterised in that** it is designed to send predetermined received information of the electric device as broadcast information or advertising information via the wireless communication interface (60), wherein it is preferably provided, **in that** it is designed, in the case of a transition from the separation status to the operating status, to send the predetermined received information of the electric device as broadcast information or advertising information via the wireless communication interface (60).

13. Energy storage module according to any one of the preceding claims, **characterised in that** it forms a system component of a system, which forms the energy storage module (40) and the electric device with a module interface or device interface (30) to connect the device interface (50) of the energy storage module (40) and/or the external communication apparatus (100).

14. Electric device with an energy storage module (40) according to any one of the preceding claims.

15. Method for using an energy storage module (40) with an electric device in the shape of an electric hand-held machine tool or a vacuum cleaner (70, 870), wherein the energy storage module (40) has a wireless communication interface (60) for wireless communication with an external communication apparatus (100) arranged remote from the energy storage module (40), in particular a vacuum cleaner (70, 870) and a module housing (41) in which an electric storage device (42), in particular a storage cell arrangement with at least one electrically rechargeable storage cell is arranged and on which a device interface (50) is provided for detachable connection of the energy storage module (40) to the electric device, wherein the device interface (50) has electric device supply contacts (52) for the electric energy supply of the electric device, **characterised by** a data communication between the energy storage module (40) and the hand-held machine tool via a data interface (54) separate from the supply contacts, in particular a bus interface, wherein the energy storage module (40) sends transmission signals (SII) via the wireless communication interface (60) to the external communication apparatus (100) as a function of received information (EM) obtained via the data interface (54) from the electric device and/or sends transmission information (SM) to the electric device as a function of received signals (ESI) received via the wireless communication interface (60) from the external communication apparatus (100).

## Revendications

1. Module de stockage d'énergie (40) à utiliser avec un appareil électrique sous la forme d'une machine d'outil à main électrique ou d'un aspirateur (70, 870), dans lequel le module de stockage d'énergie (40) une interface de communication sans fil (60) pour la communication sans fil avec un dispositif de communication externe (100) agencé éloigné du module de stockage d'énergie (40), en particulier un aspirateur (70, 870), et un boîtier de module (41), dans lequel un accumulateur d'énergie électrique (42), en particulier un ensemble de cellules de stockage avec au moins une cellule de stockage (43) rechargeable électriquement, est agencé et au niveau duquel une interface d'appareil (50) est prévue pour la liaison amovible du module de stockage d'énergie (40) à l'appareil électrique, dans lequel l'interface d'appareil (50) présente des contacts d'alimentation d'appareil (52) électriques pour l'alimentation en énergie électrique de l'appareil électrique, **caractérisé en ce que** l'interface d'appareil (50) du module de stockage d'énergie (40) présente une interface de données (54) séparée des contacts d'alimentation d'appareil (52), en particulier une interface de bus, pour une communication de données avec l'appareil électrique, dans lequel le module de stockage d'énergie (40) est configuré pour l'émission de signaux d'émission (SII) par le biais de l'interface de communication sans fil (60) au dispositif de communication externe (100) en fonction d'informations de réception (EM) obtenues par l'appareil électrique par le biais de l'interface de données (54) et/ou pour l'émission d'informations d'émission (SM) à l'appareil électrique en fonction de signaux de réception (ESI) reçus par le dispositif de communication externe (100) par le biais de l'interface de communication sans fil (60).

2. Module de stockage d'énergie selon la revendication 1, **caractérisé en ce que** les informations de réception (EM) englobent au moins une information de fonctionnement, en particulier une information de commutation, qui affiche un état de fonctionnement ou une disponibilité de l'appareil électrique relié au module de stockage d'énergie (40), et **en ce que** le module de stockage d'énergie (40) est configuré pour l'émission d'une information d'émission (SM) dépendant de l'information de fonctionnement, en particulier d'un signal de commande, par le biais de l'interface de communication sans fil (60) pour la mise en marche ou l'arrêt du dispositif de communication externe (100), en particulier de l'aspirateur (70, 870), et/ou pour l'émission d'un message de connexion (440) pour l'établissement d'une liaison de communication, en particulier liaison de commande (S1, S2), avec le dispositif de communication externe (100).

3. Module de stockage d'énergie (40) selon la revendication 2, **caractérisé en ce que** l'information de fonctionnement ou la disponibilité de l'appareil électrique dépend du fait si un moteur d'entraînement électrique (22) et/ou un dispositif de commande d'appareil (46) pour la commande de l'appareil électrique, est allumé et/ou **en ce que** l'interface de données (54) pour une communication, en particulier une communication de bus, entre le module de stockage d'énergie (40) et l'appareil électrique est activée et/ou fonctionnelle, et/ou **en ce que** l'information de fonctionnement englobe au moins une information de disponibilité, en particulier un message de bus, lequel est transmis entre le module de stockage d'énergie (40) et l'appareil électrique dans le cadre d'une communication d'initialisation lors de la mise en marche du dispositif de commande d'appareil (46) ou du moteur d'entraînement électrique (22).

4. Module de stockage d'énergie selon l'une quelconque des revendications 2 ou 3, **caractérisé en ce que** l'information de fonctionnement englobe une requête d'au moins une information caractérisant le module de stockage d'énergie (40), en particulier d'une grandeur électrique, par l'appareil électrique auprès du module de stockage d'énergie et/ou **en ce que** l'information de fonctionnement englobe un signal de tension (UB1, UB2) ou en est formée, dans lequel le signal de tension dépend d'une tension d'alimentation mise à disposition au niveau de l'interface de données (54) par le module de stockage d'énergie pour l'appareil électrique et/ou d'une tension d'alimentation mise à disposition par l'appareil électrique pour le module de stockage d'énergie (40) et/ou **en ce que** l'information de fonctionnement englobe un signal d'horloge (CL) d'une conduite de bus de l'interface de données (54) ou en est formée.

5. Module de stockage d'énergie selon l'une quelconque des revendications précédentes, **caractérisé en ce qu'**il est configuré pour l'activation ou la désactivation de la communication avec le dispositif de communication externe (100) en fonction du fait si l'appareil relié au module de stockage d'énergie (40) par le biais de l'interface d'appareil (50) est un chargeur (220) prévu pour la charge électrique de l'accumulateur d'énergie ou un appareil à alimenter en énergie électrique par le module de stockage d'énergie (40) ou si l'interface d'appareil (50) est inutilisée.

6. Module de stockage d'énergie selon l'une quelconque des revendications précédentes, **caractérisé en ce qu'**il est configuré pour l'activation ou la désactivation et/ou l'adaptation de la communication avec le dispositif de communication externe (100) en fonction d'une information typique pour le chargeur (220) et/ou en fonction d'une requête d'au moins une information requise pour la charge du module de stockage d'énergie (40) auprès du module de stockage d'énergie (40) et/ou en fonction d'une information de réception (EM) caractérisant l'appareil électrique en tant qu'appareil non adapté à la charge du module de stockage d'énergie (40) et/ou en tant qu'appareil à alimenter en énergie électrique par le module de stockage d'énergie.

7. Module de stockage d'énergie (40) selon l'une quelconque des revendications précédentes, **caractérisé en ce qu'**il présente un dispositif d'affichage, en particulier optique et/ou acoustique, pour l'édition d'au moins une information de communication concernant la communication sans fil entre le module de stockage d'énergie (40) et le dispositif de communication externe (100) et/ou la communication de données avec l'appareil électrique, dans lequel il est prévu de manière avantageuse que le dispositif d'affichage est configuré dans un premier mode de fonctionnement pour l'édition d'au moins une grandeur électrique du module de stockage d'énergie (40), en particulier d'un état de charge de l'accumulateur d'énergie électrique, et dans un deuxième mode de fonctionnement pour l'édition de l'au moins une information de communication.

8. Module de stockage d'énergie selon l'une quelconque des revendications précédentes, **caractérisé en ce que** les signaux d'émission (SII) générés à l'aide d'informations de réception (EM) de l'appareil électrique englobent au moins un signal de commutation pour la mise en service et/ou arrêt du dispositif de communication externe (100), en particulier de l'aspirateur (70, 870), et/ou au moins un message de configuration pour la configuration du dispositif de communication externe (100), en particulier de l'aspirateur (70, 870), en fonction d'une grandeur caractéristique de l'appareil électrique, dans lequel il est prévu de manière avantageuse que l'au moins un message de configuration est prévu pour la configuration d'un réglage de travail, en particulier d'une puissance d'aspiration, du dispositif de communication externe (100).

9. Module de stockage d'énergie selon l'une quelconque des revendications précédentes, **caractérisé en ce que** l'appareil électrique raccordé au module de stockage d'énergie (40) est prévu et configuré pour la coopération avec un aspirateur (70, 870), dans lequel l'aspirateur (70, 870) présente ou forme le dispositif de communication externe (100), dans lequel il est prévu de manière avantageuse qu'il est configuré pour la commutation, en particulier l'arrêt, et/ou pour l'activation ou désactivation de l'aspirateur (70, 870) en fonction du fait si l'appareil relié au module de stockage d'énergie (40) par le biais de l'interface d'appareil (50) est un appareil adapté à la coopération avec l'aspirateur (70, 870) et/ou nécessitant la fonction d'aspiration de l'aspirateur (70, 870).

10. Module de stockage d'énergie selon l'une quelconque des revendications précédentes, **caractérisé en ce qu'**il est configuré pour l'émission d'un signal de séparation informant le dispositif de communication externe (100), en particulier d'un signal d'arrêt, par le biais de l'interface de communication sans fil (60) lors d'une séparation de l'appareil à alimenter en énergie électrique et/ou en cas de sous-dépassement d'une valeur d'état de charge prédéterminée de l'accumulateur d'énergie et/ou **en ce qu'**il est configuré pour la transmission d'au moins un module de logiciel reçu par le biais de l'interface de communication sans fil (60) ou module de programme (29) et/ou de données de configuration (29A) reçues par le biais de l'interface de communication sans fil (60) par le biais de l'interface de données (54) à l'appareil électrique et/ou est configuré pour la transmission de données de protocole (29B) reçues par l'appareil électrique par le biais de l'interface de communication sans fil (60).

11. Module de stockage d'énergie selon l'une quelconque des revendications précédentes, **caractérisé en ce que** les informations de réception (EM) englobent au moins une information de statut (29C), en particulier une information d'erreur et/ou une position de commutation d'un interrupteur, de l'appareil électrique et/ou au moins une information d'identification (29D), par exemple un numéro de série et/ou une identification de type, de l'appareil électrique et/ou **en ce qu'**il est configuré pour l'émission d'au moins une information de réception (EM) par le biais de l'interface de communication sans fil (60) en fonction d'un passage d'un état de séparation à un état de fonctionnement de l'interface d'appareil (50) ou inversement, dans lequel l'interface d'appareil (50) est séparée dans l'état de séparation électriquement et/ou mécaniquement de l'appareil électrique et est reliée dans l'état de fonctionnement électriquement et/ou mécaniquement à l'appareil électrique.

12. Module de stockage d'énergie selon l'une quelconque des revendications précédentes, **caractérisé en ce qu'**il est configuré pour l'émission d'informations de réception prédéterminées de l'appareil électrique en tant qu'information de diffusion ou information de publicité par le biais de l'interface de communication sans fil (60), dans lequel il est prévu de manière avantageuse qu'il est configuré lors d'un passage de l'état de séparation à l'état de fonctionnement pour l'émission des informations de réception prédéterminées de l'appareil électrique en tant qu'information de diffusion ou information de publicité par le biais de l'interface de communication sans fil (60).

13. Module de stockage d'énergie selon l'une quelconque des revendications précédentes, **caractérisé en ce qu'**il forme un composant de système d'un système, lequel forme le module de stockage d'énergie (40) ainsi que l'appareil électrique avec une interface de module ou interface d'appareil (30) pour le raccordement de l'interface d'appareil (50) du module de stockage d'énergie (40) et/ou le dispositif de communication externe (100).

14. Appareil électrique avec un module de stockage d'énergie (40) selon l'une quelconque des revendications précédentes.

15. Procédé d'utilisation d'un module de stockage d'énergie (40) avec un appareil électrique sous la forme d'une machine d'outil à main électrique ou d'un aspirateur (70, 870), dans lequel le module de stockage d'énergie (40) une interface de communication sans fil (60) pour la communication sans fil avec un dispositif de communication externe (100) agencé éloigné du module de stockage d'énergie (40), en particulier un aspirateur (70, 870), et un boîtier de module (41), dans lequel un accumulateur d'énergie électrique (42), en particulier un ensemble de cellules de stockage avec au moins une cellule de stockage rechargeable électriquement, est agencé et au niveau duquel une interface d'appareil (50) est prévue pour la liaison amovible du module de stockage d'énergie (40) à l'appareil électrique, dans lequel l'interface d'appareil (50) présente des contacts d'alimentation d'appareil (52) électriques pour l'alimentation en énergie électrique de l'appareil électrique, **caractérisé par** une communication de données entre le module de stockage d'énergie (40) et la machine d'outil à main par le biais d'une interface de données (54) séparée des contacts d'alimentation, en particulier une interface de bus, dans lequel le module de stockage d'énergie (40) émet des signaux d'émission (SII) par le biais de l'interface de communication sans fil (60) au dispositif de communication externe (100) en fonction d'informations de réception (EM) obtenues par l'appareil électrique par le biais de l'interface de données (54) et/ou émet des informations d'émission (SM) à l'appareil électrique en fonction de signaux de réception (ESI) reçus par le dispositif de communication externe (100) par le biais de l'interface de communication sans fil (60).
